# EUROPEAN PATENT APPLICATION

(11) **EP 4 789 868 A1**
(43) Date of publication of application: **12.08.2026**
(21) Application number: 23957752.1
(22) Date of filing: 30.10.2023
(51) Int. Cl.: B32B 17/10, H01Q 1/12, H01Q 1/32, H01Q 1/38, B60J 1/00

(54) **GLASS SUBSTRATE MODULE DISPOSED IN VEHICLE**

(71) Applicant: LG Electronics Inc., Yeongdeungpo-gu Seoul 07336 (KR)
(72) Inventor: CHOI, Kukheon, Seoul 06772 (KR); JUNG, Kangjae, Seoul 06772 (KR); JUNG, Byungwoon, Seoul 06772 (KR); LEE, Soyeon, Seoul 06772 (KR); KIM, Dongjin, Seoul 06772 (KR); KIM, Uisheon, Seoul 06772 (KR)
(74) Representative: Vossius & Partner Patentanwälte Rechtsanwälte mbB
(86) International application number: PCT/KR2023/017028
(87) International publication number: WO 2025/095155

(57) **Abstract**

This glass substrate module may comprise: a first glass substrate; a second glass substrate laminated on the first glass substrate; an antenna pattern formed on a first surface of the first glass substrate; an artificial magnetic conductor (AMC) structure formed between a second surface of the first glass substrate and a first surface of the second glass substrate; and a partial reflector surface (PRS) structure formed on a second surface of the second glass substrate.

## Description

### Technical Field

This specification relates to a glass substrate module arranged in a vehicle. A particular implementation relates to a glass substrate module including a transparent antenna on vehicle glass. Another implementation relates to a flexible printed circuit board including a plurality of layers that may be arranged on vehicle glass.

### Background Art

A vehicle may perform wireless communication services with other vehicles or nearby objects, infrastructures, or a base station. In this regard, various communication services may be provided through a wireless communication system to which a long-term evolution (LTE) communication technology or a fifth-generation (5G) communication technology is applied. Meanwhile, some of LTE frequency bands may be allocated to provide 5G communication services.

On the other hand, there is a problem in that a vehicle body and a vehicle roof are made of a metallic material and block radio waves. Accordingly, a separate antenna structure may be placed on the vehicle body or the vehicle roof. Alternatively, when an antenna structure is arranged on a bottom of the vehicle body or the vehicle roof, a portion of the vehicle body or the vehicle roof corresponding to a region where the antenna structure is arranged may be made of a non-metallic material.

However, in terms of design, the vehicle body or the vehicle roof needs to be integrally arranged. In this case, an exterior of the vehicle body or roof may be made of a metallic material. This may cause antenna efficiency to be drastically lowered due to the vehicle body or roof.

In this regard, to increase communication capacity without changing an exterior design of a vehicle, a transparent antenna may be arranged on glass corresponding to a vehicle window. However, due to electrical loss of an antenna having a transparent material, there is a problem in that antenna radiation efficiency and impedance bandwidth characteristics are degraded.

Meanwhile, a type of antenna other than the transparent antenna may be arranged on the vehicle glass together with the transparent antenna. In this regard, the transparent antenna may be designed to radiate signals in a fourth-generation (4G)/5G wireless communication frequency band. The type of antenna other than the transparent antenna may be configured as an antenna having a film material. The antenna having a film material may be designed to radiate signals in Wi-Fi frequency bands (2.4 GHz, 5 GHz, and 7 GHz).

In this regard, the antennas having a film material may be arranged to be adjacent to the transparent antenna or arranged on a same layer as that of the transparent antenna. Interference may occur between the antenna having a film material and a transparent electrode constituting the transparent antenna at 2.4 GHz having a long wavelength, among the Wi-Fi frequency bands. Due to the interference between the antenna having a film material and the transparent electrode constituting the transparent antenna, distortion of a beam shape may occur.

Meanwhile, when an antenna module is arranged on the vehicle glass, a beam peak of radiation patterns of antenna elements may be generated in a direction other than a horizontal direction of the vehicle depending on an inclination angle of the vehicle glass. Therefore, there is such a problem that communication performance may be degraded in the horizontal direction when the antenna module is arranged on the vehicle glass.

### Disclosure of Invention

### Technical Problem

An objective of this specification is to prevent degradation of communication performance in a horizontal direction when an antenna module is arranged on vehicle glass.

An objective of this specification is to change a direction of a beam pattern of an antenna element in a horizontal direction when an antenna module is arranged on the vehicle glass.

An objective of this specification is to improve communication performance by reducing a feed loss of an antenna having a film material.

An objective of this specification is to reduce interference between a plurality of antennas in a glass substrate module including a transparent antenna on the vehicle glass.

An objective of this specification is to prevent distortion of a beam shape due to interference between an antenna having a film material and a transparent electrode constituting a transparent antenna.

### Solution to Problem

To achieve these and other advantages and in accordance with the purpose of this specification, as embodied and broadly described herein, there is provided a glass substrate module including: a first glass substrate; a second glass substrate arranged to be laminated on the first glass substrate; an antenna pattern arranged on a first surface of the first glass substrate; an artificial magnetic conductor (AMC) structure arranged between a second surface of the first glass substrate and a first surface of the second glass substrate; and a partial reflector surface (PRS) structure arranged on a second surface of the second glass substrate.

As an embodiment, the glass substrate module may further include a reflector arranged on the first surface of the first glass substrate and arranged in a region opposing the AMC structure.

As an embodiment, the PRS structure may be configured to reflect a part of a signal radiated from the antenna pattern and transmit a remaining part of the signal. A transmission angle of the signal transmitted through the PRS structure may be defined as an angle different from an incident angle of the signal to cause a direction of a wavefront of the signal transmitted through the PRS structure to be steered by the transmission angle. The AMC structure may be configured to reflect a signal having been reflected from the PRS structure and incident to cause the reflected signal to be incident on the PRS structure.

As an embodiment, the reflector may include a first reflector arranged to be apart from one side end portion of the antenna pattern; and a second reflector arranged to be apart from another side end portion of the antenna pattern.

As an embodiment, a gap between the reflector and a third antenna pattern portion in which the antenna pattern is arranged may be set to be equal to or greater than 0.03 times a wavelength corresponding to a lowest operating frequency in a WiFi frequency band.

As an embodiment, the AMC structure may include a first AMC structure arranged in a region opposing the first reflector; and a second AMC structure arranged in a region opposing the second reflector.

As an embodiment, the antenna pattern may be arranged in a region having a first width in an X-axis direction and a first length in a Y-axis direction. The PRS structure may include a plurality of PRS patterns arranged to be apart in parallel with each other in the X-axis direction in a region having a second width in the X-axis direction and the first length in the Y-axis direction. The plurality of PRS patterns may include first PRS patterns arranged to be apart from one end of the antenna pattern and second PRS patterns arranged to be apart from another end of the antenna pattern.

A flexible printed circuit board having a plurality of layers according to another aspect of this specification may include a first antenna connection portion and a second antenna connection portion each arranged on a transparent substrate positioned between a first glass substrate and a second glass substrate, and connected to a first antenna pattern portion and a second antenna pattern portion, respectively; an antenna pattern arranged on a first surface of the first glass substrate; a first metal structure arranged between a second surface of the first glass substrate and a first surface of the second glass substrate; and a second metal structure arranged on a second surface of the second glass substrate.

As an embodiment, the flexible printed circuit board may further include a third metal structure arranged on the first surface of the first glass substrate and arranged in a region opposing the first metal structure.

### Advantageous Effects of Invention

Hereinafter, technical effects of a glass substrate module including a transparent antenna on vehicle glass and a flexible circuit board including a plurality of layers are to be described.

According to this specification, when an antenna module is arranged on the vehicle glass, metal structures may be arranged to be adjacent to an antenna element to optimally change a beam pattern and improve communication performance.

According to this specification, when an antenna module is arranged on the vehicle glass, metal structures may be arranged to be adjacent to an antenna element to change a direction of a beam pattern of the antenna element in a horizontal direction.

According to this specification, an antenna having a film material may be implemented as an on-glass structure and feed loss may be reduced through slot-coupled feeding to thereby improve communication performance.

According to this specification, in the glass substrate module including a the transparent antenna on the vehicle glass, an antenna having a film material and a plurality of metal structures may be arranged on the flexible circuit board, thereby reducing interference between a plurality of antennas.

According to this specification, by arranging an antenna having a film material and a plurality of metal structures on the flexible circuit board, distortion of a beam shape due to interference between the antenna having a film material and a transparent electrode constituting the transparent antenna may be prevented.

Further scope of applicability of this specification will become apparent from the following detailed description. It should be understood, however, that the detailed description and specific examples, such as the preferred embodiment of the disclosure, are given by way of illustration only, since various changes and modifications within the idea and scope of the disclosure will be apparent to those skilled in the art.

### Brief Description of Drawings

FIG. 1 is a diagram illustrating a vehicle according to an embodiment of this specification.
FIG. 2 is a configuration diagram of the vehicle according to an embodiment of this specification.
FIG. 3 is a perspective view of glass of the vehicle, the glass being configured to be combined with or attached to a frame of the vehicle.
FIG. 4 is a cross-sectional view in which the glass and the frame of the vehicle each shown in FIG. 3 are combined with each other.
FIG. 5 illustrates a structure of an antenna assembly and a connector arranged in a transparent region and an opaque region of the vehicle glass, respectively.
FIG. 6 illustrates radiation patterns of antennas in structures in which antenna modules are arranged on front glass and side glass of the vehicle, respectively.
FIG. 7 is a front view of a glass substrate module in which a transparent antenna module and an antenna pattern configured to operate in a WiFi band are arranged.
FIG. 8 is a cross-sectional view of a glass substrate module in which a plurality of metal structures are arranged to steer a beam pattern radiated from an antenna pattern according to this specification.
FIG. 9 illustrates radiation patterns of antenna patterns operating in WiFi frequency bands.
FIG. 10 illustrates a front view of an artificial magnetic conductor (AMC) structure of the glass substrate module according to this specification and a perspective view of a glass substrate on which the AMC structure is arranged, respectively.
FIG. 11 shows phase values of reflection losses of the AMC structure of the glass substrate module according to this specification.
FIG. 12 is a front view of a partial reflector surface (PRS) structure arranged to overlap or non-overlap the antenna pattern according to an embodiment.
FIG. 13 illustrates a structure in which a flexible circuit board is combined with the glass substrate module of FIG. 7.
FIG. 14 is a front view of the glass substrate module having the AMC structure of FIG. 10.
FIG. 15 is a perspective view of the glass substrate module having the PRS structure of (a) of FIG. 12.
FIGS. 16A and 16B illustrate perspective views in which reflectors are arranged to be adjacent to the antenna pattern in the glass substrate module according to this specification.
FIG. 17 is an enlarged view of the flexible circuit board in which the reflectors are arranged at one side and another side of the antenna pattern, respectively.
FIG. 18 is a perspective view in which AMC structures are arranged to be adjacent to an antenna pattern on a different layer in the glass substrate module according to this specification.
FIG. 19 is an enlarged view of a flexible circuit board on which the AMC structure is arranged to be adjacent to a feed pattern and reflectors are arranged at one side and another side of the antenna pattern.
FIG. 20 is a perspective view in which the PRS structure is arranged on a different layer from that of the antenna pattern in the glass substrate module according to this specification.
FIG. 21 is a front view of a glass substrate module in which the AMC structure is arranged only at one side of the antenna pattern.
FIG. 22 illustrates radiation patterns depending on whether an antenna pattern is present.
FIG. 23 shows a comparison between radiation patterns in a WiFi frequency band depending on whether an AMC structure is present.

### Mode for the Invention

Hereinafter, embodiments disclosed herein will be described in detail with reference to the accompanying drawings, and the same or similar elements are designated with the same numeral references, regardless of the numerals in the drawings, and their redundant description will be omitted. Suffixes "module" and "unit" used for components used in the following description are merely intended for easy description of this specification, and each suffix itself is not intended to give any special meaning or function. In describing the embodiments disclosed herein, moreover, the detailed description will be omitted when specific description for publicly known technologies to which the disclosure pertains is judged to obscure the gist of the present disclosure. The accompanying drawings are used to help easily understand the technical idea of this specification and it should be understood that the idea of this specification is not limited by the accompanying drawings. The idea of this specification should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected" or "coupled" to another element, the element may be directly connected or coupled to the another element, or intervening elements may also be present. In contrast, when an element is referred to as being "directly connected with" or "directly coupled to" another element, there are no intervening elements present.

A singular representation may include a plural representation unless it represents a definitely different meaning from the context.

Terms such as "include" or "has" as used herein should be understood that they are intended to indicate the existence of a feature, a number, a step, an element, a component, or a combination thereof disclosed in this specification, and it may also be understood that a possibility of presence or addition of one or more other features, numbers, steps, elements, components, or combinations thereof are not excluded in advance.

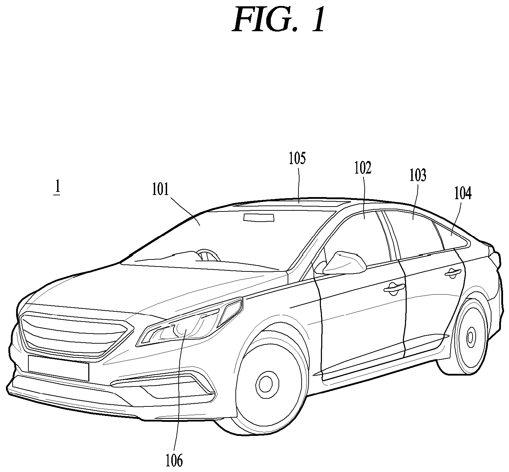

Hereinafter, a transparent antenna module according to this specification and a method of manufacturing the same are described in detail. In this regard, FIG. 1 is a diagram illustrating a vehicle according to an embodiment of this specification.

Referring to FIG. 1, a vehicle 1 may include at least one communication antenna. The vehicle 1 may transmit and/or receive signals of various frequency bands using the communication antenna. The vehicle 1 may perform communications such as vehicle-to-vehicle (V2V), vehicle to infrastructure (V2I), vehicle-to-pedestrian (V2P), vehicle-to-network (V2N), and the like.

The antenna may include a substrate made of a material such as olyethylene terephthalate (PET), and an antenna pattern arranged on the substrate. For example, the antenna may be a transparent antenna.

The antenna may be arranged on a dielectric of the vehicle 1. The antenna may be arranged on glass of the vehicle 1. The antenna may be combined with or attached to a front windshield 101, door glass 102 and 103, quarter glass 104, a rear windshield (not illustrated), a side mirror (not illustrated), a sunroof 105, or lamp glass 106. For example, the antenna may be a transparent antenna.

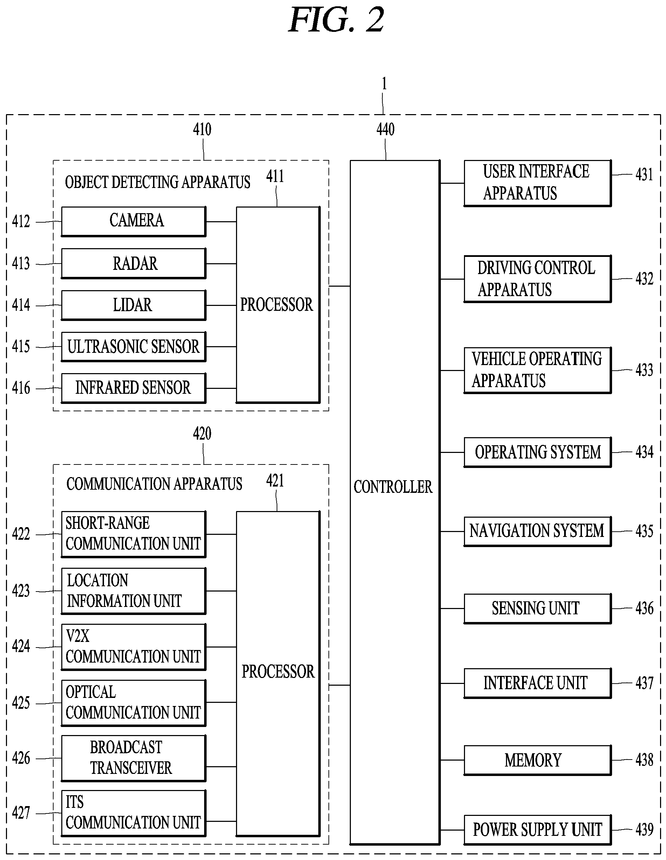

FIG. 2 is a configuration diagram of the vehicle according to an embodiment of this specification. Referring to FIG. 2, the vehicle 1 may include an object detection device 410, a communication device 420, a user interface device 431, a driving operation device 432, a vehicle drive device 433, a driving system 434, a navigation system 435, a sensing unit 436, an interface unit 437, a memory 438, a power supply unit 439, and/or a controller 440. On the other hand, the vehicle 1 may further include components other than the components described above, or some of the components described above may not be included.

The object detection device 410 may be a device configured to detect an object located outside the vehicle 1. For example, the object detection device 410 may include a processor 411, a camera 412, a radar 413, a LiDAR 414, an ultrasonic sensor 415, and/or an infrared sensor 416.

The communication device 420 may be a device configured to perform communication with an external device. The communication device 420 may include at least one from among a transmitting antenna, a receiving antenna, and a radio frequency (RF) circuit or an RF device capable of implementing various communication protocols to perform communication. For example, the communication device 420 may include a processor 421, a short-range communication unit 422, a location information unit 423, a vehicle-to-everything (V2X) communication unit 424, an optical communication unit 425, a broadcast transceiver 426 and/or an ITS communication unit 427.

The user interface device 431 may be a device configured for interaction between the vehicle 1 and a user. The vehicle 1 may implement a user interface (UI) or a user experience (UX) through the user interface device 431.

The driving operation device 432 may be a device configured to receive a user input for driving. The vehicle drive device 433 may be a device configured to electrically control drive of various devices within the vehicle 1. The driving system 434 may be a system configured to control various driving operations of the vehicle 1. The navigation system 435 may provide navigation information. The sensing unit 436 may sense a state of the vehicle 1.

The interface unit 437 may function as an interface with various types of external devices connected to the vehicle 1. The memory 438 may store basic data for units of the vehicle 1, control data for controlling operations of the units, input or output data, and the like. The power supply unit 439 may supply power needed for operations of respective components. The controller 440 may control overall operations of each unit within the vehicle 1. The controller 440 may be implemented as an electronic control unit (ECU) and/or a telematics control unit (TCU).

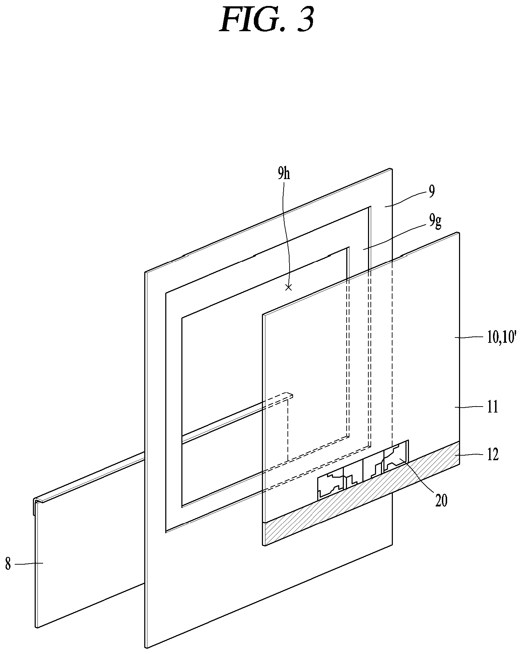

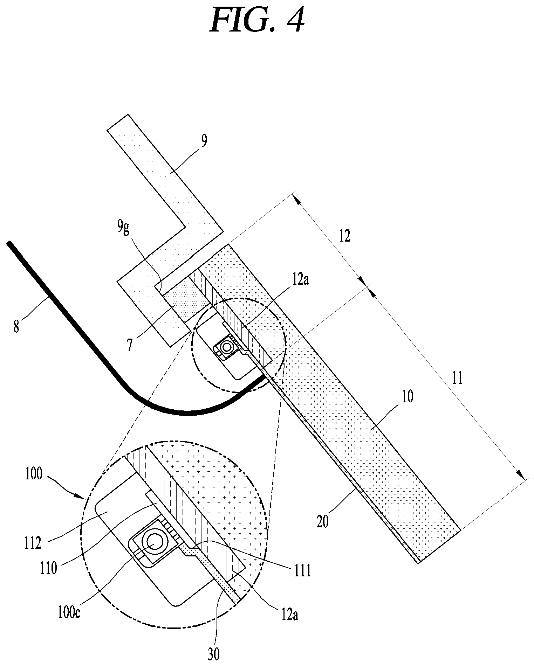

Meanwhile, vehicle glass on which the transparent antenna module according to this specification is implemented may be combined with a frame of a vehicle. In this regard, FIG. 3 is a perspective view of glass of the vehicle, the glass being configured to be combined with or attached to a frame of the vehicle. FIG. 4 is a cross-sectional view in which the glass and the frame of the vehicle each shown in FIG. 3 are combined with each other.

Referring to FIGS. 3 and 4, glass 10 or 10' may be combined with or attached to a frame 9 of the vehicle, and cover an opening 9h of the frame 9. For example, the glass 10 or 10' may be glass of the vehicle 1 such as a front windshield 101, the door glass 102 and 103, the quarter glass 104, the rear windshield, the side mirror, the sunroof 105, or the lamp glass 106 each shown in FIG. 1.

A groove 9g of the frame 9 may extend along an edge of the glass 10 or 10', and define a boundary of the opening 9h. For example, the frame 9 may include a metal material, and a sealant 7 may be filled between the groove 9g and the glass 10 or 10'. The groove 9g may be arranged to have a height difference with respect to an inner boundary of the frame 9. The glass 10 in which an opaque region 12 is placed may be arranged in the groove 9g arranged to have a height difference with respect to an inner end portion of the frame 9. As the glass 10 is arranged in the groove 9g, it may be considered that a height difference is not present in the groove 9g when viewed outside the vehicle.

An antenna 20 may be located on one surface of the glass 10 or inside the glass 10. The antenna 20 may be transparent. The antenna 20 may be flexible.

A connection module 100 including a connector 100c may be arranged between the edge of the glass 10 or 10' and the antenna 20, and located on one surface of the glass 10 or 10'. The connector 100c of the connection module 100 may be electrically connected to the antenna 20 through a substrate 30. An inner cover 8 may oppose the glass 10 with respect to the frame 9 and cover the connection module. The inner cover 8 may be referred to as an interior cover 8. The connection module may be referred to as a connector device, a Fachkreis automobile or working group automobile (FAKRA) jack portion, or a connector assembly.

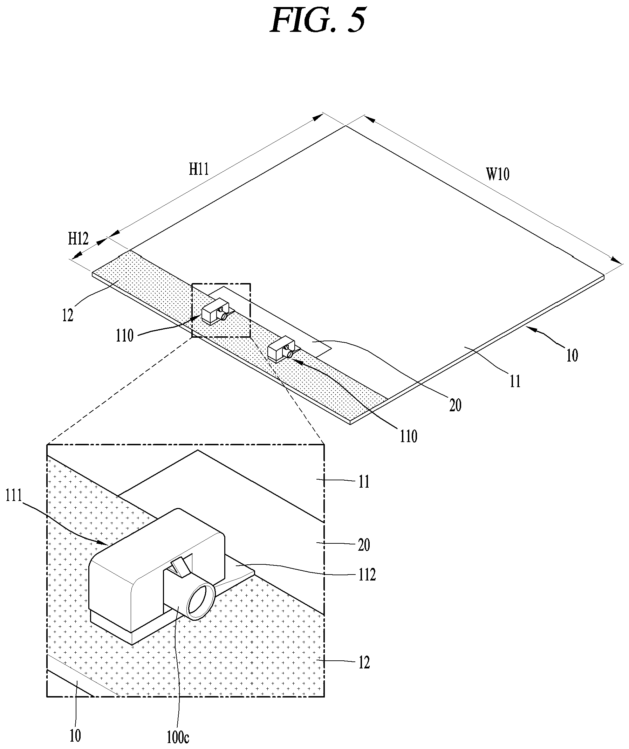

Meanwhile, an antenna assembly for a vehicle in which the transparent antenna module according to this specification is implemented may be arranged on a transparent region and an opaque region of glass of the vehicle. In this regard, FIG. 5 illustrates a structure of an antenna assembly and a connector arranged in a transparent region and an opaque region of the vehicle glass, respectively.

Referring to of FIG. 5, the glass 10 may include a transparent region 11 and an opaque region 12. The opaque region 12 may be a black mask region or a frit region. For example, the transparent region 11 may occupy most of the glass 10, and the opaque region 12 may be adjacent to one edge of the glass 10. The transparent region 11 and the opaque region 12 may have a same width W10, and a height H11 of the transparent region 11 may be greater than a height H12 of the opaque region 12.

The antenna 20 may be positioned in the transparent region 11 to be adjacent to a boundary between the transparent region 11 and the opaque region 12. The connection module including the connector 100c may be positioned in the opaque region 12, and the connector 100c of the connection module may be connected to the antenna 20 through a housing lower plate 111. The housing lower plate 111 may be engaged with a housing upper plate 112 to constitute a housing 110. The connector 100c may be accommodated inside the housing 110. The housing 110 having the connector 100c accommodated therein may be arranged in the opaque region 12. Meanwhile, at least a part of the connection module may be located in the transparent region 11.

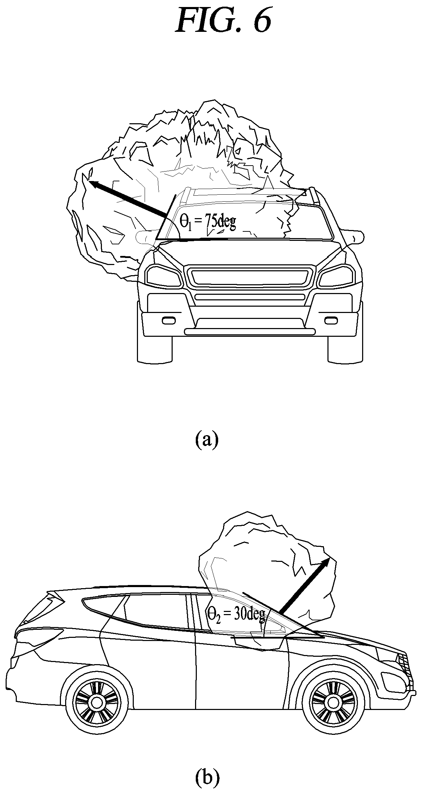

Hereinafter, a glass substrate module on which the transparent antenna module arranged on the vehicle glass according to this specification is arranged is described. In this regard, FIG. 6 illustrates radiation patterns of antennas in structures in which antenna modules are arranged on front glass and side glass of the vehicle, respectively.

Referring to (a) of FIG. 6, the side glass is arranged to be inclined at a certain angle or greater with respect to a horizontal plane. For example, the side glass may be arranged to be inclined at a first angle θ1 of about 75 degrees with respect to the horizontal plane. In a structure in which a transparent antenna is arranged on the side glass, a radiation pattern of the antenna is generated to be perpendicular to the side glass. For example, in the structure in which the transparent antenna is arranged on the side glass, a radiation pattern of the antenna is generated at an angle of about 15 degrees with respect to the horizontal plane. In the structure in which the transparent antenna is arranged on the side glass, a radiation pattern of the antenna is generated at about 75 degrees with respect to a vertical plane. Accordingly, this satisfies a low elevation angle requirement of 70 to 90 degrees, which is a requirement for a beam steering direction of a transparent antenna.

Referring to (b) of FIG. 6, the front glass or the rear glass is arranged to be inclined at a certain angle or less with respect to the horizontal plane. For example, the front glass may be arranged to be inclined at a second angle θ2 of about 30 degrees with respect to the horizontal plane. In a structure in which the transparent antenna is arranged on the front glass, a radiation pattern of the antenna is generated to be perpendicular to the front glass. For example, in the structure in which the transparent antenna is arranged on the front glass, a radiation pattern of the antenna is generated at an angle of about 60 degrees with respect to the horizontal plane. In the structure in which the transparent antenna is arranged on the front glass, a radiation pattern of the antenna is generated at about 30 degrees with respect to the vertical plane. Accordingly, it is difficult to satisfy the low elevation angle requirement of 70 to 90 degrees, which is the requirement for a beam steering direction of the transparent antenna.

In this regard, the transparent antenna may be configured as a transparent electrode structure having a single layer. A radiation direction of the transparent antenna having a single layer is generated in a vertical direction with respect to a plane on which the antenna is placed. Accordingly, in a structure that an antenna is arranged to be inclined at a certain angle or less with respect to the horizontal plane like the front glass or the rear glass, it is difficult for a beam steering direction of the transparent antenna to satisfy the requirement for a low elevation angle.

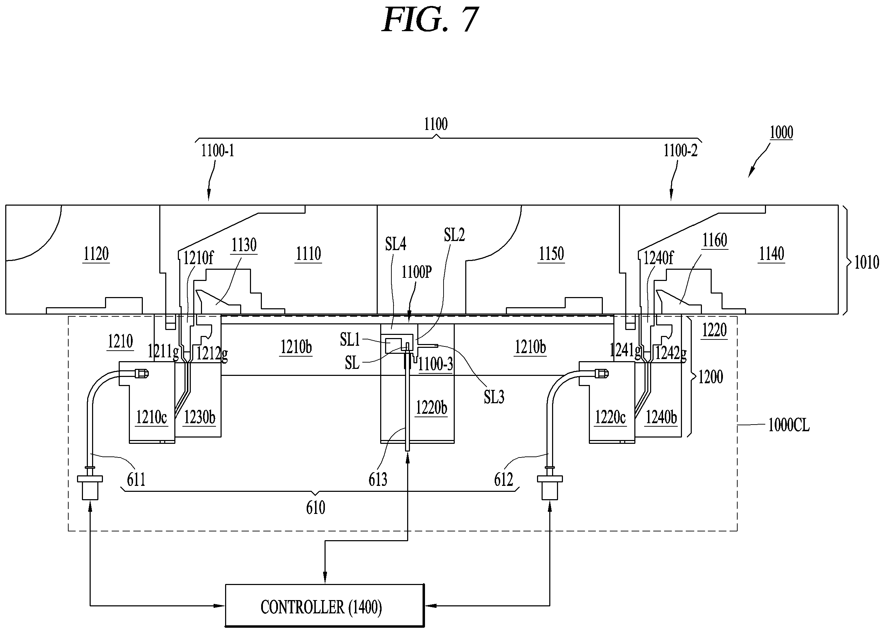

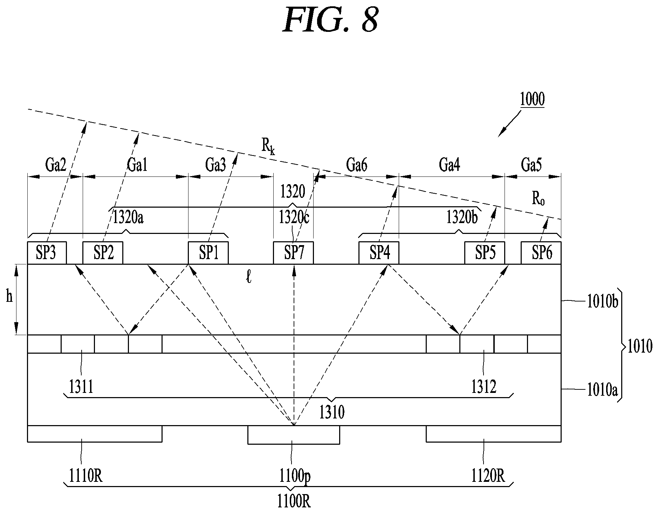

The glass substrate module on which the transparent antenna module is placed on the vehicle glass according to this specification may be arranged in a transparent region and an opaque region. In this regard, FIG. 7 is a front view of a glass substrate module in which a transparent antenna module and an antenna pattern configured to operate in a WiFi band are arranged. Meanwhile, FIG. 8 is a cross-sectional view of a glass substrate module in which a plurality of metal structures are arranged to steer a beam pattern radiated from an antenna pattern according to this specification.

Referring to FIG. 7, a glass substrate module 1000 may include an antenna pattern 1100p configured to operate in WiFi frequency bands and a transparent antenna module 1100. The antenna pattern 1100p may be arranged on a first surface of a first glass substrate 1010a. The transparent antenna module 1100 may be arranged between the first glass substrate 1010a and a second glass substrate 1010b. The transparent antenna module 1100 may include a first antenna pattern portion 1100-1 and a second antenna pattern portion 1100-2. The antenna pattern 1100p may be arranged between the first antenna pattern portion 1100-1 and the second antenna pattern portion 1100-2.

The glass substrate module 1000 according to this specification may further include a controller 1400 and a connection portion 1000CL. The controller 1400 may be configured to control the transparent antenna module 1100. The connection portion 1000CL may be configured to electrically connect the transparent antenna module 1100 to the controller 1400. The connection portion 1000CL may constitute a flexible printed circuit board (FPCB) 1200 and a coaxial cable 610. The transparent antenna module 1100 may include the first antenna pattern portion 1100-1 and the second antenna pattern portion 1100-2.

The flexible printed circuit board 1200 may be configured to include a plurality of feed patterns and a plurality of ground patterns. The flexible printed circuit board 1200 may include a plurality of layers.

A first antenna connection portion 1210 of the flexible printed circuit board 1200 may include a first feed pattern 1210f and a plurality of first ground patterns 1211g and 1212g. The first feed pattern 1210f may be arranged in a first layer among the plurality of layers. In addition, the plurality of first ground patterns 1211g and 1212g may be arranged at both sides of the first feed pattern 1210f. Accordingly, the first feed pattern 1210f and the plurality of first ground patterns 1211g and 1212g may constitute a co-planar waveguide (CPW) structure.

A third connection substrate portion 1230b of the flexible printed circuit board 1200 may include a second feed pattern and a plurality of second ground patterns arranged at both sides of the second feed pattern. A first cable connection portion 1210c of the flexible printed circuit board 1200 may include a third feed pattern and a plurality of third ground patterns arranged at both sides of the third feed pattern.

A second antenna connection portion 1220 of the flexible printed circuit board 1200 may include a fourth feed pattern 1240f and a plurality of fourth ground patterns 1241g and 1242g. The fourth feed pattern 1240f may be arranged in the first layer among the plurality of layers. The plurality of fourth ground patterns 1241g and 1242g may be arranged at both sides of the fourth feed pattern 1240f. Accordingly, the fourth feed pattern 1240f and the plurality of fourth ground patterns 1241g and 1242g may constitute a CPW structure.

A fourth connection substrate portion 1240b of the flexible printed circuit board 1200 may include a fifth feed pattern and a plurality of fifth ground patterns arranged at both sides of the fifth feed pattern. A second cable connection portion 1220c of the flexible printed circuit board 1200 may include a sixth feed pattern and a plurality of sixth ground patterns arranged at both sides of the sixth feed pattern.

The antenna pattern 1100p configured to operate in a WiFi frequency band may be arranged on a first connection substrate portion 1210b of the flexible printed circuit board 1200. The antenna pattern 1100p may be implemented as a slot antenna including a plurality of slots. The antenna pattern 1100p may be configured to include first to fourth slot portions SL1, SL2, SL3, and SL4. A signal line SL may be arranged to cause a third coaxial cable 613 to be engaged with the flexible circuit board 1200. Signals may be applied to one point of the signal line SL through an inner conductor of the third coaxial cable 613. The first slot portion SL1 and the second slot portion SL2 may be arranged at one side and another side of the signal line SL, respectively. A first width of the first slot portion SL1 arranged in a portion below the signal line SL may be smaller a second width of the first slot portion SL1 arranged at one side of the signal line SL.

The first slot portion SL1 may be connected to a first point on one side of the second slot portion SL2. The third slot portion SL3 may be connected to a second point on another side of the second slot portion SL2 to extend by a predetermined length in an X-axis direction. The fourth slot portion SL4 may be connected to an upper end portion of the second slot portion SL2 to extend by a predetermined length in the X-axis direction. The fourth slot portion SL4 may be arranged to extend in an opposite direction to the third slot portion SL3.

The first connection substrate portion 1210b may be arranged to prevent interference between the antenna pattern 1100p configured to operate in the WiFi frequency bands and the transparent antenna module 1100 operating in a 4G/5G frequency band. In this regard, the glass substrate module having the antenna pattern according to this specification is described in detail with reference to FIGS. 7 and 8.

With reference to FIGS. 7 and 8, the glass substrate module 1000 having the antenna pattern according to this specification is described. In this regard, a double-laminated glass structure for a vehicle includes the transparent antenna module 1100 arranged between the first and second glass substrates 1010a and 1010b to have an in-glass structure. This may be implemented as a structure in which a transparent antenna electrode is inserted inside a polyvinyl butyral (PVB) film between the first and second glass substrates 1010a and 1010b. In this regard, an WIFI antenna pattern having a film material may be designed to have an on-glass structure to minimize a feeding loss and a cable loss during power feeding.

The flexible printed circuit board 1200 on which the transparent antenna module 1100 and feed patterns configured to feed power to the antenna pattern 1100p are placed may be arranged to be bent outwardly from a transparent electrode inside glass. The WIFI antenna pattern having the film material may be designed to be arranged in a position in which isolation from the transparent antenna module 1100 is maximized. This specification is directed to perform beam steering in the antenna pattern 1100p having a film material, the antenna pattern 1100p being configured to operate in a WIFI band and integrated into an FPCB region of a 4G/5G transparent antenna. By arranging a plurality of metal structures in a peripheral region adjacent to the antenna pattern 1100p, beam steering may be implemented in a desired direction with respect to a signal radiated from the antenna pattern 1100p.

Meanwhile, the glass substrate module 1000 according to this specification includes a glass substrate 1010 and the antenna pattern 1100p. Conductive patterns including the antenna pattern 1100p arranged on the glass substrate 1010 may be configured to tilt a beam direction by a predetermined angle from the vertical direction.

The antenna pattern 1100p may be arranged on the first connection substrate portion 1210b of the flexible printed circuit board 1200. A third antenna pattern portion 1100-3 on which the antenna pattern 1100p is placed may be arranged in a center portion of the first connection substrate portion 1210b of the flexible printed circuit board 1200.

The glass substrate 1010 may be configured as a multilayer glass substrate structure to include the first glass substrate 1010a and the second glass substrate 1010b. The second glass substrate 1010b may be arranged to be laminated on the first glass substrate 1010a. The first glass substrate 1010a and the second glass substrate 1010b may be referred to as an upper glass substrate and a lower glass substrate, respectively.

The transparent antenna module 1100 placed between the first and second glass substrates 1010a and 1010b is implemented as an in-glass antenna. The antenna pattern 1100p arranged on the first surface of the first glass substrate 1010a is implemented as an on-glass antenna. The antenna pattern 1100p having a film form, like the flexible circuit board 1200, may be optimally arranged between the first and second antenna pattern portions 1100-1 and 1100-2 through a heuristic technique. The antenna pattern 1100p may be arranged in consideration of a distance from the feed patterns 1210f and 1240f configured to feed power to the first and second antenna pattern portions 1100-1 and 1100-2.

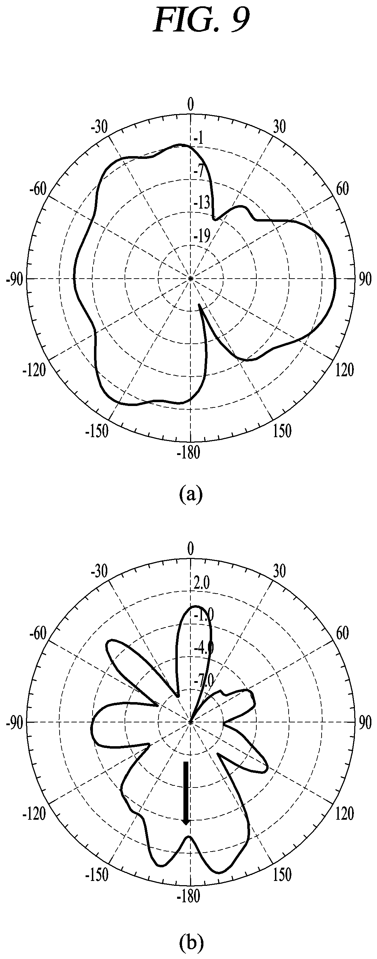

As described above, the transparent antenna 1100 for a vehicle is implemented as an in-glass antenna between the first and second glass substrates 1010a and 1010b laminated with each other. A thickness of the glass substrate 1010 including the first and second glass substrates 1010a and 1010b has an electrical length varying depending on WiFi frequency bands. Accordingly, antenna patterns operating in the WiFi frequency bands have different radiation patterns for respective frequency bands. In this regard, FIG. 9 illustrates radiation patterns of antenna patterns operating in WiFi frequency bands. (a) of FIG. 9 illustrates a radiation pattern of an antenna pattern operating in a 2.5 GHz band. (b) of FIG. 9 illustrates a radiation pattern of an antenna pattern operating in a 5.7 GHz band.

Referring to FIG. 7 to (a) of FIG. 9, a radiation pattern of the antenna pattern 1100p implemented on the glass substrate 1010 having a thickness of about 6 mm in the 2.5 GHz band is generated as an omnidirectional radiation pattern. Referring to FIGS. 7 and 8 and (b) of FIG. 9, a radiation pattern of the antenna pattern 1100p implemented on the glass substrate 1010 having a thickness of about 6 mm in the 5.7 GHz band exhibits a higher directivity and is generated in a direction toward a glass side, which corresponds to a 180-degree direction based on a coordinate of a front surface.

Accordingly, when the antenna pattern 1100p is arranged on the front glass or the rear glass as shown in (b) of FIG. 6, it is difficult for the radiation pattern of the antenna pattern 1100p in the 5 GHz band to satisfy the low elevation angle requirement. Accordingly, a plurality of metal structures need to be arranged on the flexible circuit board 1200 to cause the radiation pattern of the antenna pattern 1100p in the 5 GHz band to be tilted in the vertical direction.

The glass substrate module may further include an artificial magnetic conductor (AMC) structure 1310 and a partial reflector surface (PRS) structure 1320 to cause a beam direction to be tilted by a predetermined angle from the vertical direction. The AMC structure 1310 and the PRS structure 1320 may be referred to as a first metal structure and a second metal structure, respectively. The glass substrate module may further include a reflector 1100R arranged to be adjacent to both sides of the antenna pattern 1100p. The reflector 1100R may be referred to as a third metal structure.

The AMC structure 1310 may be located between a second surface of the first glass substrate 1010a and a first surface of the second glass substrate 1010b. The reflector 1100R may be arranged on the first surface of the first glass substrate 1010a. The reflector 1100R may be arranged in a region opposing the AMC structure 1310. The PRS structure 1320 may be arranged on a second surface of the second glass substrate 1010b.

The reflector 1100R may be also configured to include a first reflector 1110R and a second reflector 1120R. The first reflector 1110R may be arranged to be apart from one side end portion of the antenna pattern 1100p. The second reflector 1120R may be arranged to be apart from another side end portion of the antenna pattern 1100p.

The AMC structure 1310 may be configured to include a first AMC structure 1311 and a second AMC structure 1312. The first AMC structure 1311 may be arranged in a region opposing the first reflector 1110R. The second AMC structure 1312 may be arranged in a region opposing the second reflector 1120R.

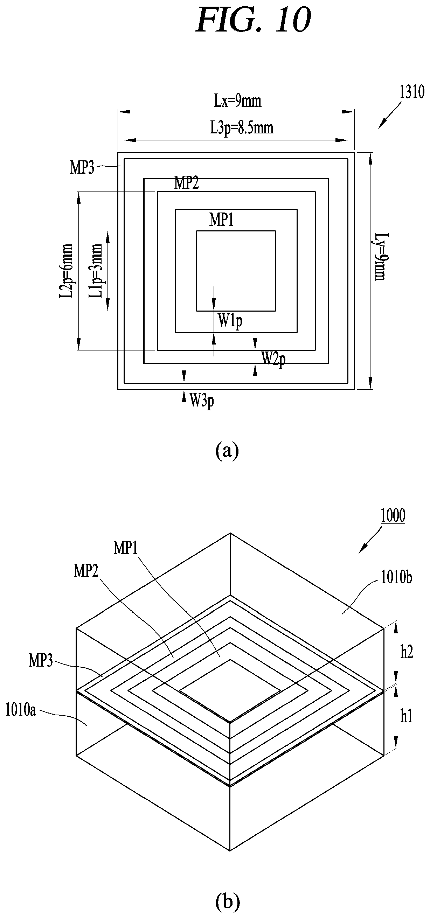

Meanwhile, FIG. 10 illustrates a front view of the AMC structure of the glass substrate module according to this specification and a perspective view of a glass substrate on which the AMC structure is arranged, respectively. (a) of FIG. 10 is a front view of the AMC structure of the glass substrate module according to this specification. (b) of FIG. 10 is a perspective view of the glass substrate on which the AMC structure according to this specification is arranged.

Referring to FIGS. 8 and 10, a unit cell of the AMC structure 1310 may be arranged on the glass substrate module 1000. The unit cell of the AMC structure 1310 may be arranged between the first glass substrate 1010a, which is the upper glass substrate, and the second glass substrate 1010b, which is the lower glass substrate. The first glass substrate 1010a and the second glass substrate 1010b may have a first thickness h1 and a second thickness h2, respectively, to be implemented as a heterogeneous laminated glass substrate module.

The unit cell of the AMC structure 1310 may be configured to include a plurality of metal patterns. The unit cell of the AMC structure 1310 may be configured to include a first metal pattern MP1 and a second metal pattern MP2. The unit cell of AMC structure 1310 may include the first metal pattern MP1, the second metal pattern MP2, and a third metal pattern MP3. Each of the plurality of metal patterns may have a closed loop structure with a polygonal shape. For example, each of the plurality of metal patterns may have a closed loop structure with a quadrilateral shape.

A number of the plurality of metal patterns may be determined in consideration of WiFi frequency bands. The WiFi frequency bands may include a first WiFi frequency band of 2.4 to 2.45 GHz and a second WiFi frequency band of 5.15 to 5.8 GHz. The WiFi frequency bands may include a third WiFi frequency band of a 7 GHz band. Shapes of the first metal pattern MP1 to the third metal pattern MP3 may be designed to reflect signals incident in the first WiFi frequency band to the WiFi frequency band.

The first metal pattern MP1 may be configured as a closed loop structure having a polygonal shape with a first length L1p as an inner length and a first width W1p. The second metal pattern MP2 may be arranged to surround the first metal pattern MP1. The second metal pattern MP2 may be configured as a closed loop structure having a polygonal shape with a second length L2p greater than the first length L1p as an inner length and a second width W2p. The third metal pattern MP3 may be arranged to surround the second metal pattern MP2. The third metal pattern MP3 may be configured as a closed loop structure having a polygonal shape with a third length L3p greater than the second length L2p as an inner length and a third width W3p.

The unit cell of the AMC structure 1310 may have a predetermined length Lx in the X-axis direction and a predetermined length Ly in a Y-axis direction. The second width W2p of the second metal pattern MP2 may be smaller than the first width W1p of the first metal pattern MP1. The third width W3p of the third metal pattern MP3 may be smaller than the second width W2p of the second metal pattern MP2.

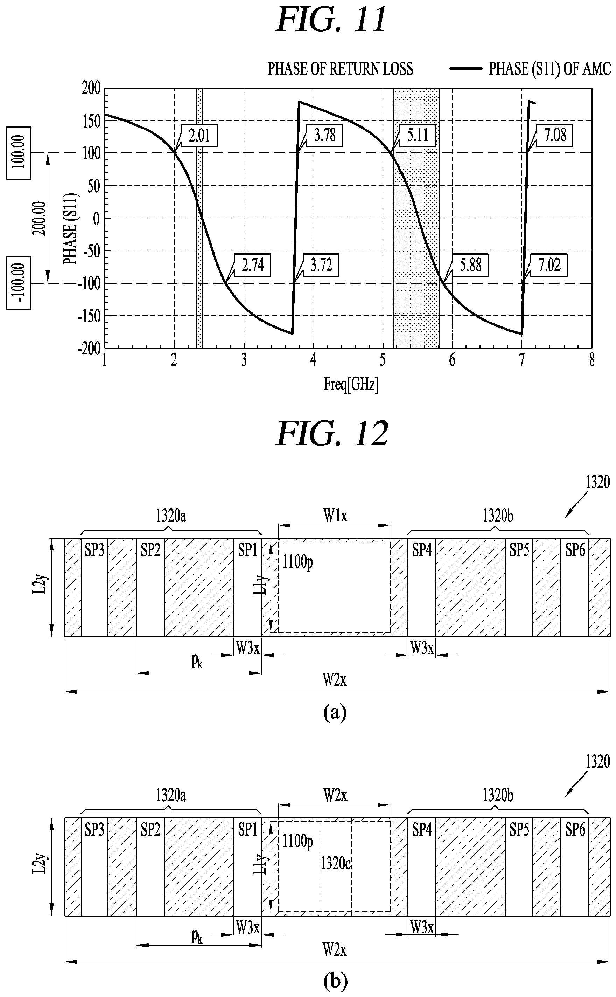

The unit cell of the AMC structure 1310 may be designed such that phases of an incident signal and a reflected signal in the WiFi frequency bands have values within a predetermined range with respect to 0 degrees. In this regard, FIG. 11 shows phase values of reflection losses of the AMC structure of the glass substrate module according to this specification.

Referring to FIGS. 10 and 11, a phase value (phase(S11)) of a reflection loss S11 in the first WiFi frequency band of 2.4 to 2.45 GHz is a value within a predetermined angular range based on 0 degrees. In a frequency band of 2.01 to 2.74 GHz, the phase value (phase(S11)) is a phase value within ±100 degrees based on 0 degrees. Accordingly, in the first WiFi frequency band of 2.4 to 2.45 GHz, the AMC structure 1310 reflects a signal with a phase value within the predetermined angular range based on 0 degrees.

In the second WiFi frequency band of 5.15 to 5.8 GHz, a phase value (phase (S11)) of the reflection loss S11 is a value within a predetermined angular range based on 0 degrees. In a frequency band of 5.11 to 5.88 GHz, the phase value (phase (S11)) is a phase value within ±100 degrees based on 0 degrees. Accordingly, in the second WiFi frequency band of 5.15 to 5.8 GHz, the AMC structure 1310 reflects a signal with a phase value within the predetermined angular range based on 0 degrees.

In the third WiFi frequency band of 7.02 to 7.08 GHz, a phase value (phase (S11)) of the reflection loss S11 is a value within a predetermined angular range based on 0 degrees. In a frequency band of 7.02 to 7.08 GHz, the phase value (phase (S11)) is a phase value within ±100 degrees based on 0 degrees. Accordingly, in the third WiFi frequency band of 7.02 to 7.08 GHz, the AMC structure 1310 reflects a signal with a phase value within the predetermined angular range based on 0 degrees.

The AMC structure 1310 may be designed such that, in the first to third WiFi frequency bands, a reflected signal has a phase value within a predetermined angular range based on 0 degrees relative to an incident signal. Thus, the first length L1p which is the inner length of the first metal pattern MP1, the second length L2p which is the inner length of the second metal pattern MP2, and the third length L3p which is the inner length of the third metal pattern MP3 may be set to 3 mm, 6 mm, and 8.5 mm, respectively. The predetermined length Lx in the X-axis direction and the predetermined length Ly in the Y-axis direction of the AMC structure 1310 may be set to 9 mm x 9 mm.

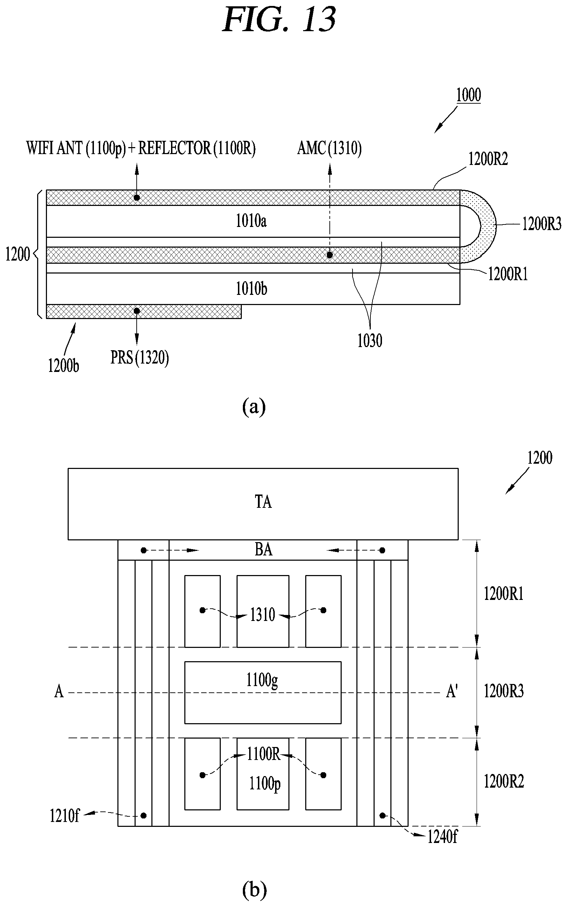

Meanwhile, the PRS structure 1320 may be arranged not to overlap the antenna pattern 1100p in a Z-axis direction. As another example, some of the PRS structure 1320 may be arranged to overlap the antenna pattern 1100p in the Z-axis direction. In this regard, FIG. 12 is a front view of the PRS structure arranged to overlap or non-overlap the antenna pattern according to an embodiment. (a) of FIG. 12 is a front view of the PRS structure 1320 arranged to non-overlap the antenna pattern. (b) of FIG. 12 is a front view of the PRS structure 1320 arranged to overlap with the antenna pattern. FIG. 13 illustrates a structure in which a flexible circuit board is combined with the glass substrate module of FIG. 7.

(a) of FIG. 13 is a side view of the glass substrate module 1000 having the flexible circuit board 1200 arranged on a front surface and an inner side of the glass substrate module 1000. (b) of FIG. 13 is a front view of the flexible circuit board 1200 connected to a transparent antenna region TA.

Referring to FIGS. 7 and 13, the flexible printed circuit board 1200 may be configured to include a plurality of regions. The flexible printed circuit board 1200 may include a first region 1200R1 positioned between the first glass substrate 1010a and the second glass substrate 1010b and a second region 1200R2 positioned outside of either the first or second glass substrate 1010a or 1010b. A partial region of the first region 1200R1 may be electrically connected to the transparent antenna module 1100. A partial region of the second region 1200R2 may be electrically connected to the coaxial cable 610. The antenna pattern 1100p may be arranged in another partial region of the second region 1200R2.

The flexible circuit board 1200 may be configured to include the first region 1200R1, the second region 1200R2, and a third region 1200R3. The first region 1200R1 may include a bonding region BA bonded to the transparent antenna region TA. The feed patterns 1210f and 1240f may be arranged on the flexible circuit board 1200 to feed power to transparent antennas arranged in the transparent antenna region TA.

The AMC structure 1310 may be arranged in the first region 1200R1 of the flexible circuit board 1200. The antenna pattern 1100p and the reflector 1100R may be arranged in the second region 1200R2 of the flexible circuit board 1200. The reflector 1100R may be arranged at one side and another side of the antenna pattern 1100p, respectively. The third region 1200R3 of the flexible circuit board 1200 may be configured such that the flexible circuit board 1200 is bent. The third region 1200R3 may be configured such that the flexible circuit board 1200 is bent along a line AA'. The third region 1200R3 may be arranged to surround a side surface of the first glass substrate 1010a.

A metal pattern arranged in the first region 1200R1 of the flexible circuit board 1200 may be implemented as an in-glass structure. A metal pattern arranged in the second region 1200R2 of the flexible circuit board 1200 may be implemented as an on-glass structure. The antenna pattern 1100p, i.e., a WIFI antenna arranged in the second region 1200R2 of the flexible circuit board 1200 may implement beam steering by combining with the AMC structure 1310 of the first region 1200R1. The antenna pattern 1100p may be combined with the reflector 1100p of the first region 1200R1 to implement beam steering. The antenna pattern 1100p may be combined with a PRS pattern 1310 of a second flexible circuit board 1200 to implement beam steering. The antenna pattern 1100p may implement beam steering of a WIFI antenna by utilizing metal patterns having an in-glass structure and an on-glass structure in limited regions.

The limited regions of the flexible circuit board 1200 and the second flexible circuit board 1200 may be implemented as a combination of an AMC structure, a metasurface, a reflector, and/or a PRS pattern, etc. A structure in which a WiFi antenna is integrated with a 4G/5G transparent antenna may be provided through the limited regions of the flexible circuit board 1200 and the second flexible circuit board 1200. Meanwhile, a signal interference between WiFi antennas in the structure of being integrated with a 4G/5G transparent antenna according to this specification may be reduced, thereby decreasing design complexity of the WiFi antennas. As a signal interference between the WiFi antennas in the structure of being integrated with the 4G/5G transparent antenna is reduced compared to a case in which a signal interference is at a predetermined level or higher, the WiFi antennas may be designed independently.

The flexible circuit board 1200 may be arranged on the front surface and the inner side of the glass substrate module 1000. The PRS structure 1320 arranged on a rear surface of the glass substrate module 1000 may be configured as a separate substrate. The antenna pattern 1100p and the reflector 1100R may be arranged on the flexible circuit board 1200 placed on the front surface of the glass substrate module 1000. The AMC structure 1310 may be arranged on the flexible circuit board 1200 placed on the inner side of the glass substrate module 1000. The PRS structure 1320 arranged on the rear surface of the glass substrate module 1000 may be configured as the second flexible circuit board 1200b.

In this regard, the glass substrate module 1000 may include the first glass substrate 1010a which is upper glass, the second glass substrate 1010b which is lower glass, and a film layer 1030 arranged between the first and second glass substrates 1010a and 1010b. The first glass substrate 1010a and the second glass substrate 1010b may constitute a heterogeneous laminated glass structure laminated by the film layer 1030. The film layer 1030 may be configured as a polyvinyl butyral (PVB) layer, but is not limited thereto and may vary depending on an application.

The AMC structure 1310 may be arranged between the first and second glass substrates 1010a and 1010b. The antenna pattern 1100 configured to operate in the WiFi frequency bands and the reflector 1100R may be arranged on the first surface of the first glass substrate 1010a. The PRS structure 1320 may be arranged on the second surface of the second glass substrate 1010b. The AMC structure 1310 between the first and second glass substrates 1010a and 1010b and the PRS structure 1320 on the second surface of the second glass substrate 1010b may be referred to as the first metal structure and the second metal structure, respectively. The first metal structure is not limited to the AMC structure 1310, and may be implemented as a metasurface or a PRS structure depending on an application. The second metal structure is not limited to the PRS structure 1320, and may be implemented as an AMC structure or a metasurface depending on an application.

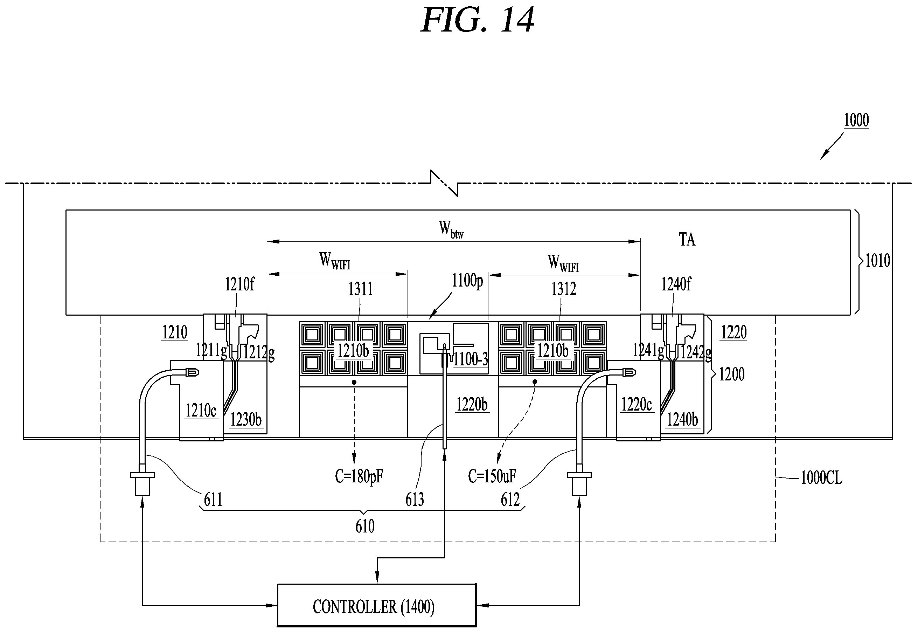

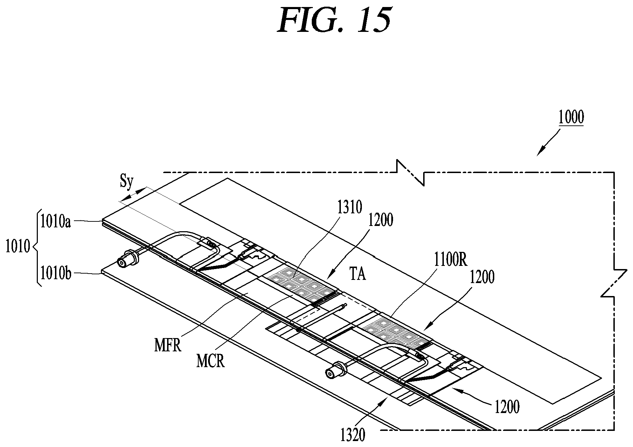

Meanwhile, the glass substrate module 1000 according to this specification may be configured to include a transparent antenna having a metal mesh structure and a metal pattern arranged in an opaque region. In this regard, FIG. 14 is a front view of the glass substrate module having the AMC structure of FIG. 10. FIG. 15 is a perspective view of the glass substrate module having the PRS structure of (a) of FIG. 12.

Referring to FIGS. 7, 8, and 13 to 15, a width of a region in which metal structures configured to improve isolation between the transparent antenna module 1100 and the antenna pattern 1100p and optimize a beam pattern may be arranged on the flexible printed circuit board 1200 is limited. In this regard, with respect to the region in which the metal structures may be arranged on the flexible printed circuit board 1200, a width W_{WiFi} in the X-axis direction may be limited to a predetermined range based on about 50 mm. With respect to the region in which the metal structures may be arranged on the flexible printed circuit board 1200, a length in the Y-axis direction may be limited to a predetermined range based on about 20 mm. In this regard, a region of the flexible printed circuit board 1200, the region being limited to about 50 mm x 20 mm, has a value smaller than 62.5 mm, which is 0.5 wavelength based on a lowest frequency of 2.4 GHz. Therefore, at least some of the first to third metal structures needs be arranged in the region of the flexible printed circuit board 1200 limited to about 50 mm x 20 mm to improve isolation and optimize a beam pattern.

The reflector 1100R may be arranged on the first surface of the first glass substrate 1010a. The reflector 1100R may be arranged on a first surface of the flexible circuit board 1200. The reflector 1100R may be configured to reflect a signal radiated in a lateral direction from the antenna pattern 1100p implemented as a slot antenna. The AMC structure 1310 may be arranged between the first and second glass substrates 1010a and 1010b. The AMC structure 1310 may be arranged on a second surface of the flexible circuit board 1200. The PRS structure 1320 may be arranged on the second surface of the second glass substrate 1010b. The PRS structure 1320 may be arranged on the second flexible circuit board 1200b.

With reference to FIGS. 8 and 13 to 15, the PRS structure 1320 arranged to non-overlap or overlap the antenna pattern 1110p and the glass substrate module 1000 including the PRS structure 1320 are described. The antenna pattern 1100p may be arranged in a region having a first width W1x in the X-axis direction and a first length L1y in the Y-axis direction. The PRS structure 1320 may include a plurality of PRS patterns. The plurality of PRS patterns may be arranged to be apart in parallel with each other in the X-axis direction in a region having a second width W2x in the X-axis direction and a second length L2y in the Y-axis direction. The second width W2x may be greater than the first width W1x. The second length L2y may be equal to or greater than the first length L1y.

The plurality of PRS patterns may be configured to include first PRS patterns 1320a and second PRS patterns 1320b. The first PRS patterns 1320a may be arranged in a first region to be apart from one end of the antenna pattern 1100p. The second PRS patterns 1320b may be arranged in a second region to be apart from another end of the antenna pattern 1100p. Each width of the first PRS patterns 1320a may be configured as a third width W3x. Each length of the first PRS patterns 1320a may be configured as the second length L2y. A gap defined between adjacent first PRS patterns 1320a may be configured as a first or second gap Ga1 or Ga2. Each width of the second PRS patterns 1320b may be configured as the third width W3x. Each length of the second PRS patterns 1320b may be configured as the second length L2y. A gap defined between adjacent second PRS patterns 1320b may be configured as a fourth or fifth gap Ga4 or Ga5.

The plurality of PRS patterns may be configured such that some of the PRS structure 1320 are arranged to overlap the antenna pattern 1100p in the Z-axis direction. In this regard, the plurality of PRS patterns may further include a third PRS pattern 1320c. The third PRS pattern 1320c may be arranged in a third region opposing the region in which the antenna pattern 1100p is arranged. A center of the third PRS pattern 1320c and a center of the antenna pattern 1100p may be arranged at a same point.

The first PRS patterns 1320a may include first to third sub-patterns SP1, SP2, and SP3 arranged in a direction away from the antenna pattern 1100p. The second PRS patterns 1320b may include fourth to sixth sub-patterns SP4, SP5, and SP6 arranged in a direction away from the antenna pattern 1100p. The third PRS pattern 1320c may correspond to a seventh sub-pattern SP7.

A first gap Ga1 between the first sub-pattern SP1 and the second sub-pattern SP2 may be greater than a second gap Ga2 between the second sub-pattern SP2 and the third sub-pattern SP3. A fourth gap Ga4 between the fourth sub-pattern SP4 and the fifth sub-pattern SP5 may be greater than a fifth gap Ga5 between the fifth sub-pattern SP5 and the sixth sub-pattern SP6. The first gap Ga1 and the fourth gap Ga4 may be arranged in a same distance. The second gap Ga2 and the fifth gap Ga5 may be arranged in a same distance.

A third gap Ga3 between the first sub-pattern SP1 and the antenna pattern 1100p may be smaller than the first gap Ga1 and greater than the second gap Ga2. A sixth gap Ga6 between the fourth sub-pattern SP4 and the antenna pattern 1100 may be smaller than the fourth gap Ga4 and greater than the fifth gap Ga5. The third gap Ga3 and the sixth gap Ga6 may be arranged in a same distance.

Meanwhile, the AMC structure 1310 of the glass substrate module 1000 according to this specification may be configured to reflect a signal and the PRS structure 1320 may be configured to adjust a phase during reflection and transmission of the signal. In this regard, the PRS structure 1320 is configured to reflect a part of a signal radiated from the antenna pattern 1100p and transmit a remaining part of the signal. A transmission angle of the signal transmitted through the PRS structure 1320 is defined at an angle different from an incident angle of the signal. A direction of a wavefront of the signal transmitted through the PRS structure 1320 may be steered by the transmission angle of the signal transmitted through the PRS structure 1320. The AMC structure 1310 is configured to reflect the signal having been reflected from the PRS structure 1320 and incident, thereby causing the signal to be incident on the PRS structure 1320.

By adjusting a phase of a signal transmitted through each of the plurality of PRS patterns constituting the PRS structure 1320, a wavefront of the signal transmitted through the PRS structure 1320 may be steered as presented in Equation 1 below. $\begin{matrix}{\sum }_{k}^{m} {a}_{k} {e}^{{jR}_{k}} \\ {R}_{k} = - β \left(\sqrt{{p}_{k}^{2} + {h}^{2}}+2kl\right) + {\sum }_{i - 1}^{k} \left({Γ}_{i +}{ϕ}_{i}\right) + {T}_{k + 1}\end{matrix}$

In this regard, m is a number of sub-patterns of the PRS structure 1320 and, as one example, may be set to m=7. However, m is not limited thereto and may vary depending on an application. A phase of a signal reflected from an i-th sub-pattern of the PRS structure 1320 corresponds to Γᵢ. A phase of a signal reflected from the i-th sub-pattern of the PRS structure 1320, incident on the AMC structure 1310, and then, reflected back from the AMC structure 1310 corresponds to Φᵢ. A phase of a (k+1)-th signal of the PRS structure 1320 corresponds to Tₖ₊₁. An electrical length (period) corresponding to a distance between a K-th AMC structure 1310 and the PRS structure 1320 corresponds to pₖ. An electrical length of a signal radiated from the antenna pattern 1110 and passing through the PRS structure 1320 corresponds to l.

Accordingly, a phase of a transmission signal transmitted through the first to seventh sub-patterns SP1 to SP7 of the PRS structure 1320 may be adjusted to control a direction of the wavefront of the transmission signal.

The AMC structure 1310 may reflect a signal incident in the WiFi frequency band to have a phase within a predetermined angular range based on 0 degrees. The AMC structure 1310 may be configured to include the first AMC structure 1311 arranged at one side of the antenna pattern 1100p and the second AMC structure 1312 arranged at another side of the antenna pattern 1100p. The first AMC structure 1311 may be configured to have a plurality of unit cells such that N unit cells are arranged in the X-axis direction and M unit cells are arranged in the Y-axis direction. The second AMC structure 1312 may be configured to have a plurality of unit cells such that N unit cells are arranged in the X-axis direction and M unit cells are arranged in the Y-axis direction.

Meanwhile, the glass substrate module 1000 according to this specification may include the antenna pattern 1100p configured to operate in the WiFi frequency bands and the transparent antenna module 1100. The antenna pattern 1100p may be arranged on the first surface of the first glass substrate 1010a. The transparent antenna module 1100 may be arranged between the first glass substrate 1010a and the second glass substrate 1010b. The transparent antenna module 1100 may include the first antenna pattern portion 1100-1 and the second antenna pattern portion 1100-2. The antenna pattern 1100p may be arranged between the first antenna pattern portion 1100-1 and the second antenna pattern portion 1100-2.

The glass substrate module 1000 according to this specification may further include the controller 1400 and the connection portion 1000CL. The controller 1400 may be configured to control the transparent antenna module 1100. The connection portion 1000CL may be configured to electrically connect the transparent antenna module 1100 to the controller 1400. The connection portion 1000CL may constitute the flexible printed circuit board (FPCB) 1200 and the coaxial cable 610. The transparent antenna module 1100 may include the first antenna pattern portion 1100-1 and the second antenna pattern portion 1100-2.

The flexible printed circuit board 1200 may include the first region 1200R1 positioned between the first glass substrate 1010a and the second glass substrate 1010b and the second region 1200R2 positioned outside of either the first or second glass substrate 1010a or 1010b. A partial region of the first region 1200R1 may be electrically connected to the transparent antenna module 1100. A partial region of the second region 1200R2 may be electrically connected to the coaxial cable 610. The antenna pattern 1100p may be arranged in another partial region of the second region 1200R2.

Meanwhile, in the glass substrate module according to this specification, beam-steering may be performed with respect to the antenna pattern 1100p by the reflector 1100R, the AMC structure 1310, and the PRS structure 1320. In this regard, a beam steering method by each of the reflector 1100R, the AMC structure 1310, and the PRS structure 1320 is described in detail with reference to the drawings.

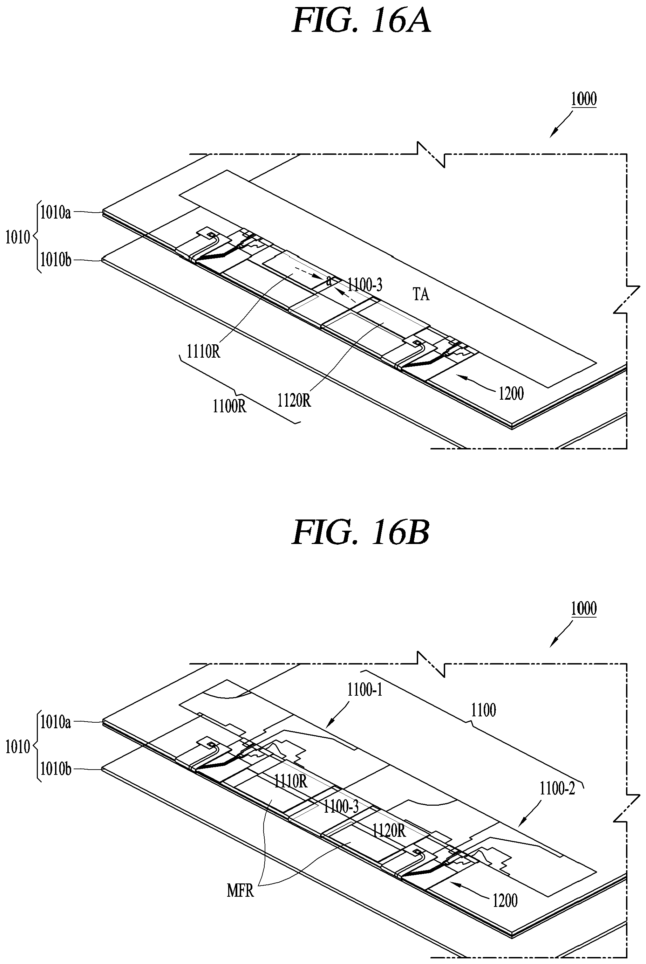

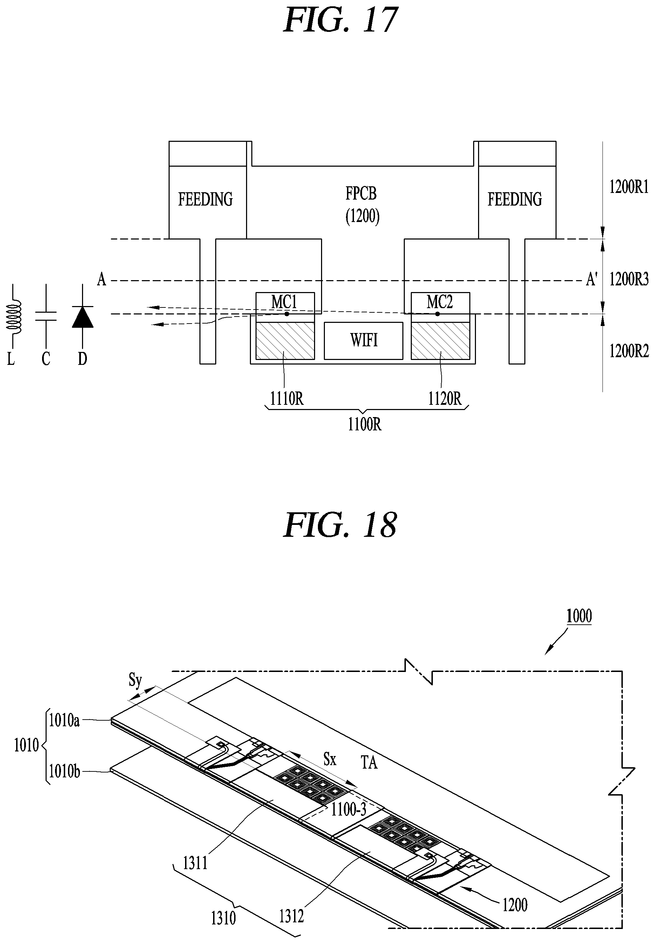

In this regard, FIGS. 16A and 16B are perspective views in which reflectors are arranged to be adjacent to an antenna pattern in the glass substrate module according to this specification. FIG. 16A illustrates a structure in which the reflector 1100R is arranged to be adjacent to a region in which the antenna pattern 1110p is placed. FIG. 16B illustrates a structure in which the reflector 1100R is arranged to be adjacent to the region in which the antenna pattern 1110p is placed, and a matching circuit is arranged between the reflector 1100R and a metal frame region MFR. A matching circuit region MCR in which the matching circuit is placed may be arranged between the reflector 1100R and the metal frame region MFR. FIG. 17 is an enlarged view of the flexible circuit board in which the reflectors are arranged at one side and another side of the antenna pattern, respectively.

Referring to FIGS. 13 to 17, the reflectors 1110R and 1120R may be arranged at one side and another side of the third antenna pattern portion 1100-3 in which the antenna pattern 1100p is placed, respectively. The reflectors 1110R and 1120R may be configured as metal patterns for beam steering by utilizing reflection of a leaky wave radiated from the antenna pattern 1100p. The reflectors 1110R and 1120R may be arranged at one side of the antenna pattern 1100p as film antennas on the flexible circuit board 1200 to be integrated with the transparent antenna region TA. The reflectors 1110R and 1120R may be configured as the metal patterns having a predetermined length and width.

The reflectors 1110R and 1120R may be implemented as an AMC structure having a plurality of closed-loop metal patterns, a PRS structure having a plurality of parallel metal patterns, or a metasurface having an arbitrary shape. Therefore, the reflectors 1110R and 1120R that may be implemented as the AMC structure, the PRS structure, or the metasurface may be referred to as the third metal structure.

The third metal structure may be arranged at one side, another side, or both sides of the antenna pattern 1100p configured for beam steering. A gap α between the third metal structure and the antenna pattern 1100p may be set to be equal to or greater than 0.03 times a target wavelength corresponding to a target resonance frequency. A gap α between the reflector 1100R and the third antenna pattern portion in which the antenna pattern 1100p is arranged may be set to be equal to or greater than 0.03 times a wavelength corresponding to a lowest operating frequency of the WiFi frequency band.

The first region 1200R1 of the flexible circuit board 1200 may be arranged between the first and second glass substrates 1010a and 1010b. The second region 1200R2 of the flexible circuit board 1200 may be arranged on the first surface of the first glass substrate 1010a. The third region 1200R3 of the flexible circuit board 1200 may be arranged on a side surface of the first glass substrate 1010a. Matching circuits MC1 and MC2 may be arranged between the reflector 1100R and a ground region 1100g arranged in the third region 1200R3 of the flexible circuit board 1200. A phase of a reflected signal radiated through the antenna pattern 1100p and reflected from the reflectors 1110R and 1120R may be tuned through the matching circuits.

The first matching circuit MC1 may be arranged between an end portion of the third region 1200R3 of the flexible circuit board 1200 and an end portion of the first reflector 1110R. The second matching circuit MC2 may be arranged between the end portion of the third region 1200R3 of the flexible circuit board 1200 and an end portion of the second reflector 1120R. The first and second matching circuit MC1 and MC2 may be implemented as a passive circuit including an inductor L and a capacitor C and/or an active circuit such as a diode D having characteristics changed by a control voltage.

For example, the first matching circuit MC1 may be implemented as a first capacitor having a first capacitance C1. The second matching circuit MC2 may be implemented as a second capacitor having a second capacitance C2. The first capacitance C1 and the second capacitance C2 may be set to 180 pF and 150 uF, respectively, but are not limited thereto and may vary depending on an application.

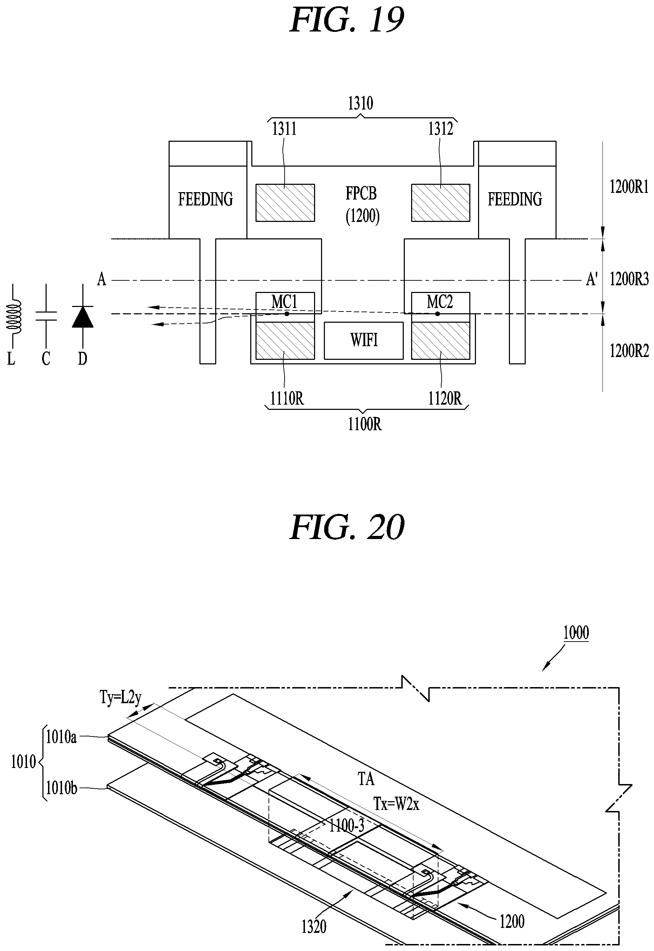

Meanwhile, a beam steering method performed in a structure in which the AMC structure 1310 is arranged on a layer different from that of the antenna pattern in the glass substrate module according to this specification is to be described. In this regard, FIG. 18 is a perspective view in which AMC structures are arranged to be adjacent to an antenna pattern on a different layer in the glass substrate module according to this specification. FIG. 19 is an enlarged view of a flexible circuit board on which the AMC structure is arranged to be adjacent to a feed pattern and reflectors are arranged at one side and another side of the antenna pattern.

Referring to FIGS. 7, 8, 13 to 15, 18, and 19, a pattern structure for beam steering with respect to an antenna pattern 1100p using reflection of a leaky wave may be arranged. The AMC structure 1310 may be arranged to be adjacent to the antenna connection portions 1210 and 1220 in which the feed patterns 1210f and 1240f are placed. The reflector 1100R may be arranged at one side and another side of the antenna pattern 1100p to be adjacent to the antenna pattern 1100p. The matching circuits MC1 and MC2 may be arranged at an end of the reflector 1100R.

The AMC structure 1310 arranged on the flexible circuit board 1200 and configured to feed power to the transparent antenna region TA may be referred to as the first metal structure. The first metal structure is not limited to the AMC structure 1310, but may be changed to a PRS structure, a reflector, or a metasurface structure depending on an application.

A size of a unit cell of the first metal structure implemented as the AMC structure 1310, the PRS structure, the reflector, or the metasurface structure may be defined to operate in a WiFi frequency band in double-laminated glass. The WiFi frequency band may be set to include 2.4 to 2.5GHz and 5.15 to 5.85GHz. The WiFi frequency band may be set to further include a 7GHz band. A size of the unit cell of the AMC structure 1310 may be set to β x γ mm. A size of the AMC structure 1310 in which N unit cells are arranged in the X-axis direction and M unit cells are arranged in the Y-axis direction may be set to Nβ X Mγ mm.

A region in which the AMC structure 1310 may be arranged may be determined by taking into account a minimum distance from the antenna pattern 1100p and a minimum distance from the antenna connection portion 1210 and 1220 in which the feed patterns 1210f and 1240f are arranged. A length and a width of the region in which the AMC structure 1310 may be arranged may be limited to Sx and Sy in the X-axis and Y-axis directions. Accordingly, numbers (N and M) of unit cells that may be arranged in the AMC structure 1310 may be determined as maximum integers satisfying Nβ < Sx and Mγ < Sy. Sx may be defined as a length from one end portion or another end portion of the antenna pattern 1100p configured for beam steering to the antenna connection portions 1210 and 1220 in which feed patterns configured to feed power to the transparent antenna region TA are arranged. Sy may be defined as a length from a film configured to feed power to the transparent antenna region TA to the metal frame region MFR.

Meanwhile, a beam steering method performed in a structure in which a PRS structure is arranged on a layer different from that of the antenna pattern in the glass substrate module according to this specification is to be described. In this regard, FIG. 20 is a perspective view in which the PRS structure is arranged on a different layer from that of the antenna pattern in the glass substrate module according to this specification. Referring to FIGS. 12 and 20, the PRS structure 1320 may be constituted as a structure non-overlapping or a structure overlapping the antenna pattern 1100p.

Referring to FIGS. 7, 12 and 20, the PRS structure 1320 may be arranged on the second glass substrate 1010b to control a wavefront of a signal radiated by the antenna pattern 1100p. The second metal structure that may be placed on the second surface of the second glass substrate 1010b is not limited to the PRS structure 1320, but may also be changed to a reflector, an AMC structure, or a metasurface structure.

A length Tx of the PRS structure 1320 is smaller than a distance between the antenna connection portions 1210 and 1220 in which the feed patterns 1210f and 1240f are arranged. The length Tx of the PRS structure 1320 is determined by a sum of the width W2x of the antenna pattern 1100p configured for beam steering and widths of regions in which the sub-patterns SP1 to P6 are arranged. Numbers and widths of and distances between the sub-patterns SP1 to P6 may be determined to allow to control wavefronts at desired angles according to phase shifts for reflection and transmission of leaked waves. A width Ty of the PRS structure 1320 may be determined as being less than or equal to a width Sy of a region in which the AMC structure 1310 of FIG. 17 may be arranged.

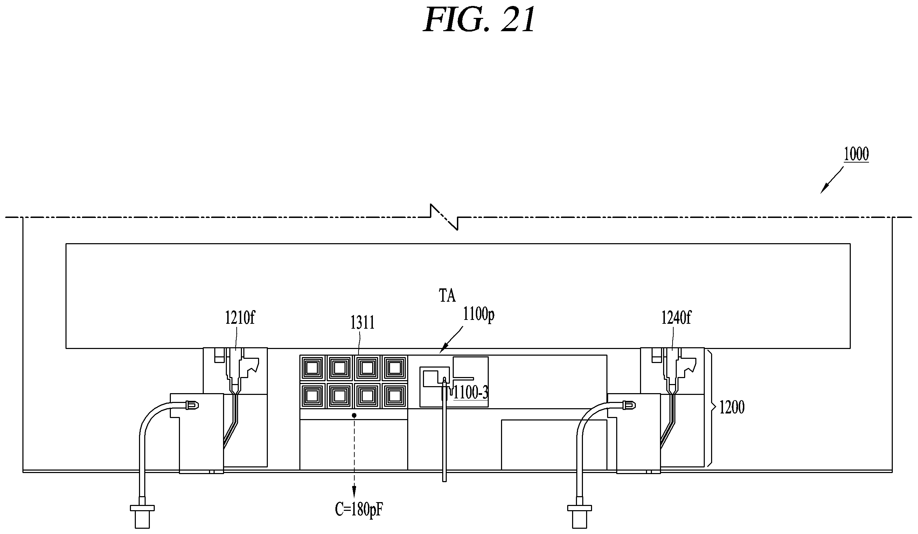

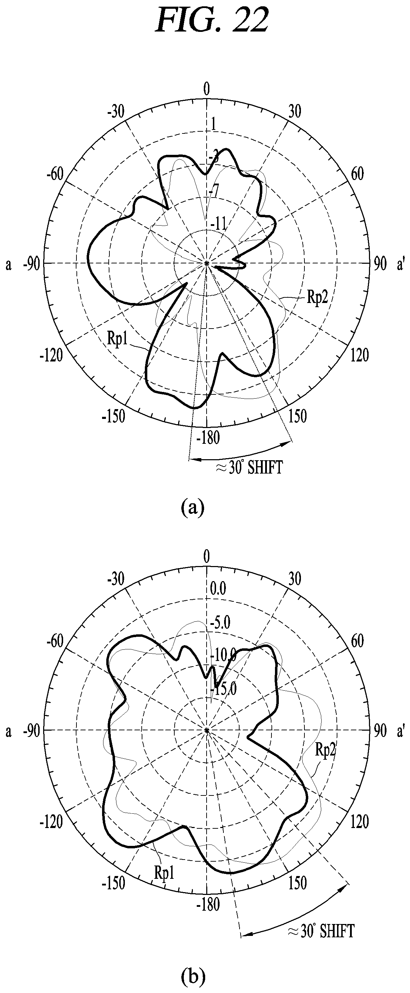

Meanwhile, in the glass substrate module according to this specification, the AMC structure arranged on a layer different from that of the antenna pattern is arranged only at one side of the antenna pattern to cause an antenna beam to be tilted in one direction. In this regard, FIG. 21 is a front view of a glass substrate module in which the AMC structure is arranged only at one side of the antenna pattern. FIG. 22 illustrates radiation patterns depending on whether an antenna pattern is present.

Referring to FIG. 21, the AMC structure 1311 may be arranged only at one side of the antenna pattern 1100p to steer a beam in one direction of a signal radiated from the antenna pattern 1100p. Referring to FIGS. 14 and 21, the AMC structure 1311 may be arranged only at one side of the antenna pattern 1100p or the AMC structure 1312 may be arranged only at another side of the antenna pattern 1100p.

Referring to FIGS. 8, 13, 14, and 21, the glass substrate module 1000 may include the reflector 1100R, the AMC structure 1311 and the PRS structure 1320. The antenna pattern 1100p and the reflector 1100R may be arranged on the first surface of the first glass substrate 1010a. The reflector 1100R may be arranged on the second surface of the second glass substrate 1010b. The AMC structure 1311 may be arranged on the film layer 1030 between the first and second glass substrates 1010a and 1010b. The film layer 1030 may be configured as a PVB layer, but is not limited thereto and may vary depending on an application. The AMC structure 1311 may be arranged only at one side of the antenna pattern 1100p.
(a) of FIG. 22 shows a comparison between radiation patterns at 5.3 GHz depending on whether an AMC structure is present or not. Compared to a radiation pattern Rp1 of a first structure in which an AMC structure is not present, a beam peak of a radiation pattern Rp2 of a second structure in which an AMC structure is arranged only at one side is tilted by a predetermined angle in one direction. For example, the beam peak of the radiation pattern Rp2 of the second structure may be tilted in one direction by about 30 degrees compared to a beam peak of the radiation pattern Rp1 of the first structure.
(b) of FIG. 22 shows a comparison between radiation patterns at 5.7 GHz depending on whether an AMC structure is present. Compared to the radiation pattern Rp1 of the first structure in which an AMC structure is not present, a beam peak of the radiation pattern Rp2 of the second structure in which an AMC structure is arranged only at one side is tilted by a predetermined angle in one direction. For example, a beam peak of the radiation pattern Rp2 of the second structure may be tilted in one direction by about 30 degrees compared to a beam peak of the radiation pattern Rp1 of the first structure.

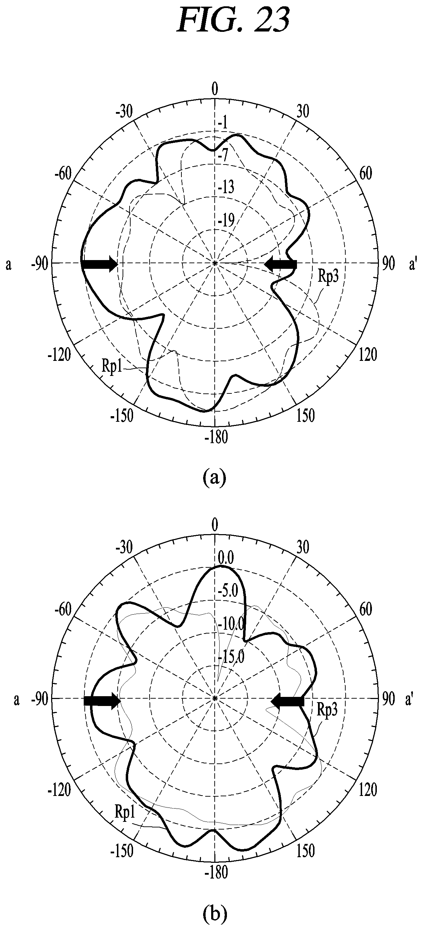

Meanwhile, in the glass substrate module according to this specification, the AMC structure arranged on a layer different from that of the antenna pattern may be arranged at both sides of the antenna pattern to prevent inflow of interference signals in a particular direction. Referring to FIG. 14, the PRS structures 1311 and 1312 may be arranged at one side and another side of the antenna pattern 1100p. As the PRS structures 1311 and 1312 are arranged at one side and another side of the antenna pattern 1100p, ripple generation in a main lobe may be suppressed and a level of a side lobe may be reduced. In this regard, FIG. 23 shows a comparison between radiation patterns depending on whether an AMC structure is present in a WiFi frequency band.
(a) of FIG. 23 shows a comparison between radiation patterns at 5.3 GHz depending on whether an AMC structure is present or not. In the first structure in which an AMC structure is not present, the radiation pattern Rp1 may have ripples generated in a main lobe pattern developed in a front direction. This may cause variations in a level of a signal received in the front direction depending on a direction. In a third structure in which AMC structures are arranged at both sides, a radiation pattern Rp3 may not have a ripple generated in a main lobe pattern. Thus, a variation does not occur in a level of a signal received in the front direction depending on a direction.
   Compared to the radiation pattern Rp1 of the first structure in which an AMC structure is not present, a level of the radiation pattern Rp3 of the third structure in which AMC structures are arranged at both sides decreases in a horizontal axis direction, thereby reducing a level of a side lobe. For example, compared to a level of the radiation pattern Rp1 of the first structure in the horizontal axis direction, a level of the radiation pattern Rp3 of the third structure in the horizontal axis direction may be reduced by 10 dB or more.
(b) of FIG. 23 shows a comparison between radiation patterns at 5.7 GHz depending on whether an AMC structure is present. In the first structure in which an AMC structure is not present, the radiation pattern Rp1 may have ripples generated in a main lobe pattern developed in the front direction. This may cause variations in a level of a signal received in the front direction depending on a direction. In the third structure in which AMC structures are arranged at both sides, the radiation pattern Rp3 may not have a ripple generated in a main lobe pattern. Thus, a variation does not occur in a level of a signal received in the front direction depending on a direction.

Compared to the radiation pattern Rp1 of the first structure in which an AMC structure is not present, a level of the radiation pattern Rp3 of the third structure in which AMC structures are arranged at both sides decreases in the horizontal axis direction, thereby reducing a level of a side lobe. For example, compared to a level of the radiation pattern Rp1 of the first structure in the horizontal axis direction, a level of the radiation pattern Rp3 of the third structure in the horizontal axis direction may be reduced by 10 dB or more. Additionally, as a null is generated in a rear direction, the radiation pattern Rp3 of the third structure may reduce unwanted radiation in the rear direction.

The glass substrate module according to one aspect of this specification has been described above. Hereinafter, a flexible printed circuit board including a plurality of layers according to another aspect of this specification is to be described. With reference to FIGS. 7 to 21, the flexible printed circuit board including a plurality of layers is described. In this regard, all the descriptions provided above with respect to the glass substrate module may be applied to the flexible printed circuit board to be described below.

The flexible printed circuit board 1200 may be configured to include the first antenna connection portion 1210, the second antenna connection portion 1220, the antenna pattern 1110p, and a plurality of metal structures. The plurality of metal structures of the flexible printed circuit board 1200 may include the first metal structure 1310 and the second metal structure 1320. The plurality of metal structures of the flexible printed circuit board 1200 may further include the third metal structure 1100R.

The first antenna connection portion 1210 and the second antenna connection portion 1220 may be arranged on a transparent substrate positioned between the first glass substrate 1010a and the second glass substrate 1010b. The antenna pattern 1110p may be arranged on the first surface of the first glass substrate 1010a. The antenna pattern 1110p may be configured to radiate a signal in a plurality of WiFi frequency bands. The first metal structure 1310 may be arranged between the second surface of the first glass substrate 1010a and the first surface of the second glass substrate 1010b. The second metal structure 1320 may be arranged on the second surface of the second glass substrate 1010b. The second metal structure 1320 may be arranged on a separate second flexible printed circuit board 1200b. The third metal structure 1100R may be arranged on the first surface of the first glass substrate 1010a. The third metal structure 1100R may be arranged in a region opposing the first metal structure 1310.

The first metal structure 1310 may be configured to reflect a signal and the second metal structure 1320 may be configured to control a phase during reflection and transmission of the signal. In this regard, the second metal structure 1320 is configured to reflect a part of a signal radiated from the antenna pattern 1100p and transmit a remaining part of the signal. A transmission angle of the signal transmitted through the second metal structure 1320 is defined as an angle different from an incident angle of the signal. A direction of a wavefront of the signal transmitted through the second metal structure 1320 may be steered by the transmission angle of the signal transmitted through the second metal structure 1320. The first metal structure 1310 is configured to reflect the signal having been reflected from the second metal structure 1320 and incident, thereby causing the signal to be incident on the second metal structure 1320.

The first metal structure 1310 may have an AMC structure. The first metal structure 1310 may include the first AMC structure 1311 and the second AMC structure 1312. The first AMC structure 1311 may be arranged in a region opposing the first reflector 1110R. The second AMC structure 1312 may be arranged in a region opposing the second reflector 1120R.

A unit cell of the first metal structure 1310 may include a plurality of metal patterns to cover a plurality of WiFi frequency bands. The unit cell of the first metal structure 1310 may include the first metal pattern MP1 to the third metal pattern MP3. The first metal pattern MP1 may be configured as a closed loop structure having a polygonal shape with the first length L1p as an inner length and the first width W1p. The second metal pattern MP2 may be arranged to surround the first metal pattern MP1. The second metal pattern MP2 may be configured as a closed loop structure having a polygonal shape with the second length L2p greater than the first length L1p as an inner length and the second width W2p. The third metal pattern MP3 may be arranged to surround the second metal pattern MP2. The third metal pattern MP3 may be configured as a closed loop structure having a polygonal shape with the third length L3p greater than the second length L2p as an inner length and the third width W3p. The first metal structure 1310 may be configured to have a plurality of unit cells such that N unit cells are arranged in the X-axis direction and M unit cells are arranged in the Y-axis direction.

The antenna pattern 1110p may be arranged in a region having the first width W1x in the X-axis direction and the first length L1y in the Y-axis direction. The second metal structure 1320 may have a PRS structure. The second metal structure 1320 may include a plurality of PRS patterns. The second metal structure 1320 may include a plurality of PRS patterns arranged to be apart in parallel with each other in the X-axis direction in a region having the second width W2x in the X-axis direction and the second length L2y in the Y-axis direction. The second width W2x may be greater than the first width W1x. The second length L2y may be equal to or greater than the first length L1y.

The plurality of PRS patterns may include the first PRS patterns 1320a arranged to be apart from one end of the antenna pattern 1110p and the second PRS patterns 1320b arranged to be apart from another end of the antenna pattern 1110p. The plurality of PRS patterns may further include third PRS patterns 1320c arranged in a third region which is opposite a region in which the antenna pattern 1100p is arranged. A center of the third PRS patterns 1320c and a center of the antenna pattern 1100p may be arranged at a same point.

The glass substrate module that may be placed on vehicle glass and the flexible printed circuit board including a plurality of layers have been described above. Hereinafter, technical effects of the glass substrate module that may be placed on vehicle glass and the flexible printed circuit board including a plurality of layers are described.

Hereinafter, technical effects of the glass substrate module including a transparent antenna on vehicle glass and the flexible circuit board including a plurality of layers are to be described.

According to this specification, when an antenna module is arranged on the vehicle glass, metal structures may be arranged to be adjacent to an antenna element to optimally change a beam pattern and improve communication performance.

According to this specification, when the antenna module is arranged on the vehicle glass, metal structures may be arranged to be adjacent to an antenna element to change a direction of a beam pattern of the antenna element in a horizontal direction.

According to this specification, an antenna having a film material may be implemented as an on-glass structure and feed loss may be reduced through slot-coupled feeding to thereby improve communication performance.

According to this specification, in the glass substrate module including the transparent antenna on the vehicle glass, an antenna having a film material and a plurality of metal structures may be arranged on the flexible circuit board, thereby reducing interference between a plurality of antennas.

According to this specification, by arranging an antenna having a film material and a plurality of metal structures on the flexible circuit board, distortion of a beam shape due to interference between the antenna having a film material and a transparent electrode constituting the transparent antenna may be prevented.

Further scope of applicability of this specification will become apparent from the following detailed description. It should be understood, however, that the detailed description and specific examples, such as the preferred embodiment of the disclosure, are given by way of illustration only, since various changes and modifications within the idea and scope of the disclosure will be apparent to those skilled in the art. The scope of this specification should be determined by reasonable interpretation of the appended claims, and all changes within the scope of equivalents of this specification are included in the scope of this specification.

## Claims

1. A glass substrate module comprising:
a first glass substrate;
a second glass substrate arranged to be laminated on the first glass substrate;
an antenna pattern arranged on a first surface of the first glass substrate;
an artificial magnetic conductor (AMC) structure arranged between a second surface of the first glass substrate and a first surface of the second glass substrate;
a reflector arranged on the first surface of the first glass substrate and arranged in a region opposing the AMC structure; and
a partial reflector surface (PRS) structure arranged on a second surface of the second glass substrate.

2. The glass substrate module of claim 1, wherein the PRS structure is configured to reflect a part of a signal radiated from the antenna pattern and transmit a remaining part of the signal,
a transmission angle of the signal transmitted through the PRS structure is defined as an angle different from an incident angle of the signal to cause a direction of a wavefront of the signal transmitted through the PRS structure to be steered by the transmission angle, and
the AMC structure is configured to reflect a signal having been reflected from the PRS structure and incident to cause the signal to be incident on the PRS structure.

3. The glass substrate module of claim 1, wherein the reflector comprises:
a first reflector arranged to be apart from one side end portion of the antenna pattern; and
a second reflector arranged to be apart from another side end portion of the antenna pattern.

4. The glass substrate module of claim 1, wherein a gap between the reflector and a third antenna pattern portion in which the antenna pattern is arranged is set to be equal to or greater than 0.03 times a wavelength corresponding to a lowest operating frequency in a WiFi frequency band.

5. The glass substrate module of claim 3, wherein the AMC structure comprises:
a first AMC structure arranged in a region opposing the first reflector; and
a second AMC structure arranged in a region opposing the second reflector.

6. The glass substrate module of claim 1, wherein a unit cell of the AMC structure comprises:
a first metal pattern having a first length as an inner length and a first width;
a second metal pattern arranged to surround the first metal pattern and having a second length greater than the first length as an inner length and a second width; and
a third metal pattern arranged to surround the second metal pattern and having a third length greater than the second length as an inner length and a third width.

7. The glass substrate module of claim 6, wherein the second width is smaller than the first width, and the third width is smaller than the second width, and
the AMC structure has a plurality of unit cells arranged therein such that N unit cells are arranged in an X-axis direction and M unit cells are arranged in a Y-axis direction.

8. The glass substrate module of claim 5, wherein the antenna pattern is arranged in a region having a first width in an X-axis direction and a first length in a Y-axis direction,
the PRS structure comprises a plurality of PRS patterns arranged to be apart in parallel with each other in the X-axis direction in a region having a second width in the X-axis direction and the first length in the Y-axis direction, and
the plurality of PRS patterns comprise first PRS patterns arranged to be apart from one end of the antenna pattern and second PRS patterns arranged to be apart from another end of the antenna pattern.

9. The glass substrate module of claim 8, wherein the plurality of PRS patterns further comprise a third PRS pattern arranged in a third region opposing the region in which the antenna pattern is arranged, and
a center of the third PRS pattern and a center of the antenna pattern are arranged at a same point.

10. The glass substrate module of claim 8, wherein the first PRS patterns comprise first to third sub-patterns arranged in a direction away from the antenna pattern,
the second PRS patterns comprise fourth to sixth sub-patterns arranged in a direction away from the antenna pattern,
a first gap between the first sub-pattern and the second sub-pattern is greater than a second gap between the second sub-pattern and the third sub-pattern, and
a fourth gap between the fourth sub-pattern and the fifth sub-pattern is greater than a fifth gap between the fifth sub-pattern and the sixth sub-pattern.

11. The glass substrate module of claim 10, wherein a third gap between the first sub-pattern and the antenna pattern is smaller than the first gap and greater than the second gap, and
a sixth gap between the fourth sub-pattern and the antenna pattern smaller than the fourth gap and greater than the fifth gap.

12. The glass substrate module of claim 1, further comprising a transparent antenna module arranged between the first glass substrate and the second glass substrate,
wherein the transparent antenna module comprises a first antenna pattern portion and a second antenna pattern portion, and
the antenna pattern is arranged between the first antenna pattern portion and the second antenna pattern portion.

13. The glass substrate module of claim 12, further comprising:
a controller configured to control the transparent antenna module; and
a connection portion electrically connecting the transparent antenna and the controller,
wherein the connection portion constitutes a flexible printed circuit board and coaxial cables,
the flexible printed circuit board comprises a first region positioned between the first glass substrate and the second glass substrate and a second region positioned outside of either the first glass substrate or the second glass substrate,
a partial region of the first region is electrically connected to the transparent antenna module,
a partial region of the second region is electrically connected to the coaxial cables, and
the antenna pattern is arranged in another partial region of the second region.

14. A flexible printed circuit board having a plurality of layers, the flexible printed circuit board comprising:
a first antenna connection portion and a second antenna connection portion each arranged on a transparent substrate positioned between a first glass substrate and a second glass substrate, and connected to a first antenna pattern portion and a second antenna pattern portion, respectively;
an antenna pattern arranged on a first surface of the first glass substrate;
a first metal structure arranged between a second surface of the first glass substrate and a first surface of the second glass substrate;
a second metal structure arranged on a second surface of the second glass substrate; and
a third metal structure arranged on the first surface of the first glass substrate and arranged in a region opposing the first metal structure.

15. The flexible printed circuit board of claim 14, wherein the second metal structure is configured to reflect a part of a signal radiated from the antenna pattern and transmit a remaining part of the signal,
a transmission angle of the signal transmitted through the second metal structure is defined as an angle different from an incident angle of the signal to cause a direction of a wavefront of the signal transmitted through the partial reflector surface (PRS) structure to be steered by the transmission angle, and
the first metal structure is configured to reflect a signal having been reflected from the second metal structure and incident to cause the signal to be incident on the second metal structure.

16. The flexible printed circuit board of claim 14, wherein the third metal structure comprises:
a first reflector arranged to be apart from one side end portion of the antenna pattern; and
a second reflector arranged to be apart from another side end portion of the antenna pattern.

17. The flexible printed circuit board of claim 16, wherein the first metal structure comprises:
a first artificial magnetic conductor (AMC) structure arranged in a region opposing the first reflector; and
a second AMC structure arranged in a region opposing the second reflector.

18. The flexible printed circuit board of claim 14, wherein the antenna pattern is arranged in a region having a first width in an X-axis direction and a first length in a Y-axis direction,
the second metal structure comprises a plurality of partial reflector surface (PRS) patterns arranged to be apart in parallel with each other in the X-axis direction in a region having a second width in the X-axis direction and the first length in the Y-axis direction, and
the plurality of PRS patterns comprise first PRS patterns arranged to be apart from one end of the antenna pattern and second PRS patterns arranged to be apart from another end of the antenna pattern.

19. The flexible printed circuit board of claim 18, wherein the plurality of PRS patterns further comprise a third PRS pattern arranged in a third region opposing the region in which the antenna pattern is arranged, and
a center of the third PRS pattern and a center of the antenna pattern are positioned at a same point.

20. The flexible printed circuit board of claim 14, wherein a unit cell of the first metal structure comprises:
a first metal pattern having a first length as an inner length and a first width;
a second metal pattern arranged to surround the first metal pattern and having a second length greater than the first length as an inner length and a second width; and
a third metal pattern arranged to surround the second metal pattern and having a third length greater than the second length as an inner length and a third width,
wherein the first metal structure has a plurality of unit cells arranged therein such that N unit cells are arranged in the X-axis direction and M unit cells are arranged in the Y-axis direction.
